# EUROPEAN PATENT APPLICATION

(11) **EP 2 434 796 A1**
(43) Date of publication of application: **28.03.2012**
(21) Application number: 09844896.2
(22) Date of filing: 19.05.2009
(51) Int. Cl.: H04W 16/26, H04B 7/15, H04W 72/04

(54) **BASE STATION, RELAY STATION, COMMUNICATION SYSTEM, AND COMMUNICATION METHOD**

(71) Applicant: Fujitsu Limited, Kawasaki-shi, Kanagawa 211-8588 (JP)
(72) Inventor: SEKI, Hiroyuki, Kawasaki-shi Kanagawa 211-8588 (JP)
(74) Representative: Ward, James Norman
(86) International application number: PCT/JP2009/059199
(87) International publication number: WO 2010/134162

(57) **Abstract**

A base station (111) wirelessly communicates with mobile stations (131), (132) located in a cell (111a), by relay of a relay station (121) that is in the cell (111a) and near a border with a cell (112a). The base station (111) receives from the relay station (121) that is in the cell (111a) and near a border with a cell (112a), adjacent cell resource information that indicates wireless resources allocated to a relay station (122). The base station (111) preferentially allocates to wireless paths between the relay station (121) and the mobile stations (131), (132), wireless resources that are different from the wireless resources indicated in the received adjacent cell resource information.

## Description

### TECHNICAL FIELD

The present invention relates to a base station, a relay station, a communication system, and a communication method that perform wireless communication.

### BACKGROUND ART

Wireless relay as a technique for realizing high throughput over a wide area is being actively investigated. For example, at the Institute of Electrical and Electronics Engineers (IEEE), investigation related to multi-hop relay is advancing.

Under the 3rd Generation Partnership Project (3GPP), in the standardization toward LTE-Advanced, investigation related to relay functionality is advancing. Furthermore, technology has been proposed in which scheduling is performed such that slot collisions do not occur when one relay station relays the signals of multiple base stations (see, for example, Patent Document 1).

Patent Document 1 : Japanese Laid-Open Patent Publication No. 2008-60868

### DISCLOSURE OF INVENTION

### PROBLEM TO BE SOLVED BY THE INVENTION

However, with the conventional technologies above, a problem arises in that when relay stations of different cells are near the border between the cells, the wireless communication performed by each of the relay stations interferes with one another causing throughput to drop.
For example, the downlink of a mobile station may be affected by interference from a base station of an adjacent cell and/or from a relay station of an adjacent cell.

Further, the uplink of a relay station or a base station may be affected by interference from a mobile station of an adjacent cell and from a relay station of an adjacent cell. Consequently, wireless communication of a high transmission speed is difficult to provide by the relay of a relay station that is near a cell border. Further, Patent Document 1 does not disclose a method of controlling interference that occurs near the borders of cells in a communication system in which relay stations respectively relay signals from various base stations.

The base station, the relay station, the communication system, and the communication method disclosed herein solve the problems above and aim to improve throughput near cell boundaries, as one objective.

### MEANS FOR SOLVING PROBLEM

To solve the problems above and achieve an object, a base station, by relay of a relay station provided in a cell of the base station, wirelessly communicates with a mobile station located in the cell and includes a receiving unit that receives from an adjacent-cell relay station provided in an adjacent cell, adjacent cell resource information related to wireless resources allocated to the adjacent-cell relay station; and an allocating unit that preferentially allocates to a wireless path between the relay station and the mobile station, wireless resources that are different from the wireless resources indicated in the received adjacent cell resource information.

According to the configuration of the base station, a wireless resource having a low potential of being affected by wireless communication interference by a relay station of an adjacent cell can be allocated to a wireless path of a relay station near a cell border.

### EFFECT OF THE INVENTION

According to the base station, the relay station, the communication system, and the communication method, throughput at a cell border can be improved.

### BRIEF DESCRIPTION OF DRAWINGS

FIG. 1 is a diagram of a configuration of a communication system according to a first embodiment;
FIG. 2 is a diagram of an example of a wireless resource in the communication system depicted in FIG. 1;
FIG. 3 is a block diagram of a base station depicted in FIG. 1;
FIG. 4 is a block diagram of a relay station depicted in FIG. 1;
FIG. 5 is a block diagram of a mobile station depicted in FIG. 1;
FIG. 6 is a sequence diagram of an example of downlink operation of the communication system depicted in FIG. 1;
FIG. 7 is a sequence diagram of uplink operation of the communication system depicted in FIG. 1;
FIG. 8 is a diagram of an example of SIR in wireless paths between the relay station and the mobile stations;
FIG. 9 is a diagram of an example of request information transmitted by a relay station;
FIG. 10 is a diagram of another example of request information;
FIG. 11 is a diagram of a wireless resource allocated by the base station;
FIG. 12 is a sequence diagram of another example of the downlink operation depicted in FIG. 6;
FIG. 13 is a sequence diagram of another example of the uplink operation depicted in FIG. 7;
FIG. 14 is a diagram of a configuration of the communication system according to a second embodiment;
FIG. 15 is a block diagram of the base station depicted in FIG. 14;
FIG. 16 is a block diagram of the relay station depicted in FIG. 14;
FIG. 17 is a sequence diagram of an example of downlink operation of the communication system depicted in FIG. 14;
FIG. 18 is a sequence diagram of an example of uplink operation of the communication system depicted in FIG. 14;
FIG. 19 is a diagram of an example wireless resource determination by the relay station;
FIG. 20 is a sequence diagram of another example of the downlink operation depicted in FIG. 17; and
FIG. 21 is a sequence diagram of another example of the uplink operation depicted in FIG. 18.

### BEST MODE(S) FOR CARRYING OUT THE INVENTION

With reference to the accompanying drawings, preferred embodiments of a base station, a relay station, a communication system, and a communication method will be described.

### (First embodiment)

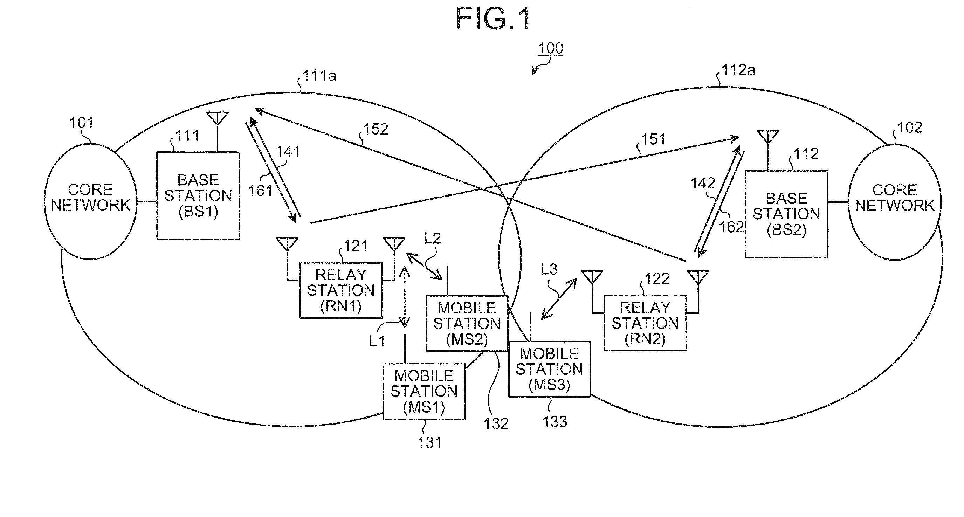

FIG. 1 is a diagram of a configuration of the communication system according to a first embodiment. As depicted in FIG. 1, a communication system 100 according to the first embodiment includes a base station 111 (BS1), a base station 112 (BS2), a relay station 121 (relay node (RN1)), a relay station 122 (RN2), and mobile stations 131-133 (MS1-MS3).

The base station 111 is connected to a core network 101 and manages communication between a communication apparatus in a cell 111a (given cell) and the core network 101. For example, by relay through the relay station 121, which is in the cell 111a (of the base station 111) and near the border with (at a "cell border region", "cell edge", etc.) the cell 112a (adjacent cell), the base station 111 wirelessly communicates with mobile stations located within a range of the relay station 121. Although not depicted, in addition to the relay station 121, other relay stations may be provided in the cell 111a, in which case, the base station 111 wirelessly communicates with mobile stations located within a range of the relay stations, by relay through the relay stations in the cell 111a.

The base station 112 is connected to a core network 102 and manages communication between the core network 102 and a communication apparatus in the cell 112a, which is adjacent to the cell 111a. Here, the core network 101 and the core network 102 may be one in the same. For example, by relay through the relay station 122, which is in the cell 112a (of the base station 112) and near the border with the cell 111a (adjacent cell), the base station 112 wirelessly communicates with mobile stations in the cell 112a. Although not depicted, in addition to the relay station 122, other relays stations may be provided in the cell 112a, in which case, the base station 112 wirelessly communications with mobile stations within a range of the relays stations in the cell 112a.

The relay station 121 relays communication between the base station 111 and the mobile stations 131, 132. The relay station 121 transmits to the base station 111, request information (reference character 141) requesting wireless resources for a wireless path L1 between the relay station 121 and the mobile station 131, and a wireless path L2 between the relay station 121 and the mobile station 132.

The relay station 121 further transmits (reference character 151) to the base station 112, the request information (reference character 141) that is transmitted to the base station 111. Using the wireless resources indicated by allocation information (reference character 161) transmitted from the base station 111 in response to the request information transmitted thereto, the relay station 121 wirelessly communicates with the mobile stations 131, 132.

The relay station 122 relays communication between the base station 112 and the mobile station 133. The relay station 122 transmits to the base station 112, request information (reference character 142) requesting wireless resources for a wireless path L3 between the relay station 122 and the mobile station 133. The relay station 122 further transmits (reference character 152) to the base station 111, the request information that is transmitted to the base station 112. Using the wireless resources indicated by allocation information (reference character 162) transmitted from the base station 112 in response to the request information transmitted thereto, the relay station 122 wirelessly communicates with the mobile station 133.

The mobile station 131 and the mobile station 132 are respectively located within a range of the relay station 121 and through relay by the relay station 121, wirelessly communicate with the base station 111. The mobile station 133 is located within a range of the relay station 122 and through relay by the relay station 122, wirelessly communicates with the base station 112. Consequently, if the wireless resources used by the relay station 121 and the relay station 122 overlap, the wireless communication between the relay station 121 and the mobile stations 131, 132 and the wireless communication between the relay station 122 and the mobile station 133 are mutually affected by interference.

The base station 111 receives the request information (reference character 152) transmitted from the relay station 122 (adjacent-cell relay station). The request information (reference character 152) indicates wireless resource candidates allocatable to the relay station 122. The base station 111 preferentially allocates to the wireless path L1 and the wireless path L2, wireless resources that are not indicated in (are different from the wireless resources indicated in) the request information (reference character 152) and transmits to the relay station 121, allocation information (reference character 161) indicating the allocated wireless resources.

For example, among the wireless resources indicated in the request information (reference character 141), the base station 111 allocates to the wireless path L1 and the wireless path L2, wireless resources that are not indicated in the request information (reference character 152), whereby from among the wireless resources requested by the relay station 121, wireless resources that are not allocated to the relay station 122 are selected and allocated to the relay station 121.

Configuration may be such that if another condition concerning the wireless resources is the same, the base station 111 allocates to the wireless path L1 and the wireless path L2, wireless resources that are different from the wireless resources indicated in the request information (reference character 152). An example of a condition in such a case is communication quality, such as the signal to interference ratio (SIR).

Further, configuration may be such that among the wireless resources that are not indicated in the request information (reference character 152), the base station 111 allocates to the wireless path L1 and the wireless path L2, wireless resources that satisfy another condition. An example of a condition in such a case is a condition that the wireless resource is one that is not allocated (or, not planned to be allocated) to another relay station in the cell 111a, a condition that the wireless resource is one whose communication quality is greater than or equal to a given threshold.

The base station 112 receives the request information (reference character 151) transmitted from the relay station 121 (adjacent-cell relay station). The request information (reference character 151) indicates wireless resource candidates that are allocatable to the relay station 121. The base station 112 preferentially allocates to the wireless path L3, wireless resources that are not indicated in the request information (reference character 151) and transmits to the relay station 122, allocation information (reference character 162) indicating the allocated wireless resources.

### (Example of wireless resource)

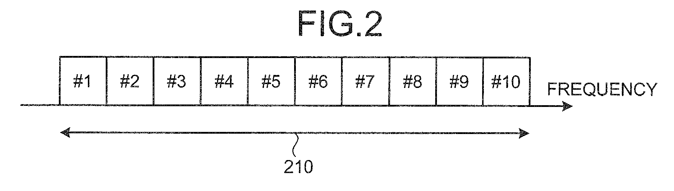

FIG. 2 is a diagram of an example of a wireless resource in the communication system depicted in FIG. 1. The horizontal axis depicted in FIG. 2 represents frequency. A wireless resource 210 is a frequency band used in the communication system 100 (refer to FIG. 1). Here, an example will be described in which the wireless resource 210 is divided into wireless resources #1-#10. The wireless resources #1-#10 are allocated to wireless intervals of the communication system 100. In FIG. 2, although the wireless resource is described as a frequency domain, the wireless resource may be a unit of a time domain, or a combination of a frequency domain and a time domain.

The base station 111 and the base station 112 respectively allocate the wireless resources #1-#10 such that interference between wireless paths in the respective cells does not occur. Consequently, the least number of required wireless resources are allocated to the wireless paths, enabling highly efficient frequency use. Nevertheless, while making adjustments such that interference does not occur between the cells 111a and 112a, the base stations 111, 112 allocate wireless resources to the relay stations 121, 122 that are near the border between the cell 111a and the cell 112a.

### (Configuration of base station according to first embodiment)

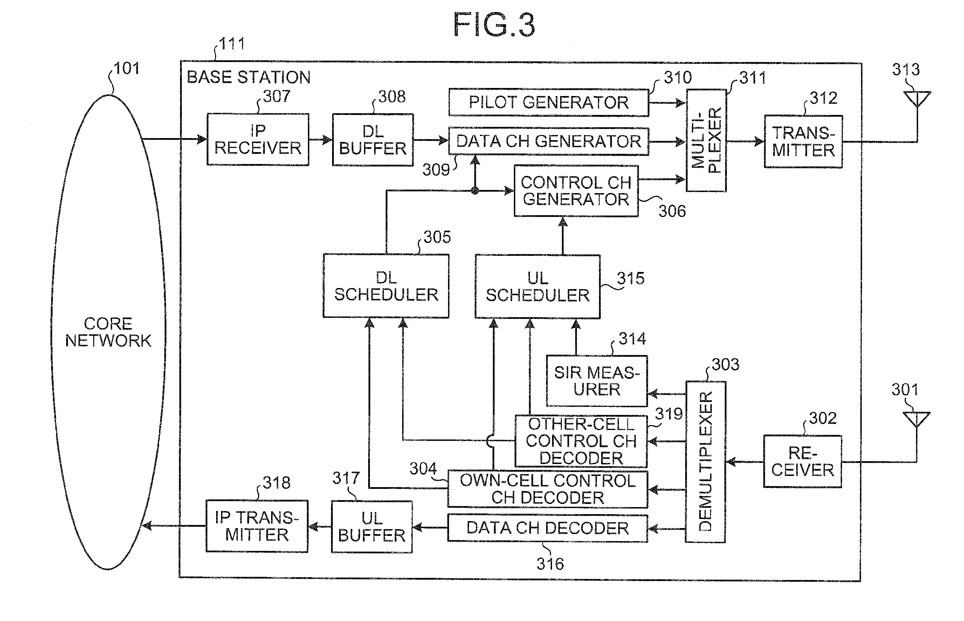

FIG. 3 is a block diagram of the base station depicted in FIG. 1. As depicted in FIG. 3, the base station 111 (refer to FIG. 1) includes a receiving antenna 301, a receiver 302, a demultiplexer 303, an own-cell control CH decoder 304, a DL scheduler 305, a control CH generator 306, an IP receiver 307, a DL buffer 308, a data CH generator 309, a pilot generator 310, a multiplexer 311, a transmitter 312, a transmitting antenna 313, and an other-cell control CH decoder 319.

The base station 111 further includes an SIR measurer 314, a UL scheduler 315, a data CH decoder 316, a UL buffer 317, and an IP transmitter 318. The receiving antenna 301 and the receiver 302 form a receiving unit that receives from the relay station 122 (adjacent-cell relay station) that is in the cell 112a (adjacent cell) and near the border with the cell 111a (of base station 111), adjacent cell resource information indicating the wireless resources allocated to the relay station 122.

The DL scheduler 305 and the UL scheduler 315 form an allocating unit that preferentially allocates to wireless paths (the wireless paths L1, L2 in FIG. 1) between the relay station 121 and the mobile stations 131, 132, wireless resources that are not indicated in the adjacent cell resource information. The DL scheduler 305 and the UL scheduler 315, for example, are implemented by a computing unit such as a central processing unit (CPU), etc.

### (Processing related to downlink of base station according to first embodiment)

Processing at the base station 111 and related to downlinks (DL), which transfer data from the core network 101 to the mobile stations 131, 132, will be described. Nonetheless, at the base station 112, the processing related to downlinks that transfer data from the core network 102 to the mobile station 133 is identical.

The receiver 302 receives a channel quality indicator (CQI) (BS1-RN1) and request information (RN1-MS) via the receiving antenna 301. The CQI (BS1-RN1) indicates the SIR between the base station 111 and the relay station 121.
The request information (RN1-MS) indicates the wireless resources requested of the base station 111, for the wireless paths between the relay station 121 and the mobile stations 131, 132.

The receiver 302 outputs to the demultiplexer 303, the received CQI (BS1-RN1) and the request information (RN1-MS). The receiver 302 further receives, via the receiving antenna 301, adjacent cell resource information transmitted by the relay station 122 in the cell 112a. The adjacent cell resource information indicates the wireless resources allocated to the relay station 122 in the cell 112a.

The receiver 302 outputs the adjacent cell resource information to the demultiplexer 303. The demultiplexer 303 outputs to the own-cell control CH decoder 304, the CQI (BS1-RN1) and the request information (RN1-MS) received from the receiver 302. The demultiplexer 303 further outputs the adjacent cell resource information to the other-cell control CH decoder 319.

The own-cell control CH decoder 304 decodes the CQI (BS1-RN1) and the request information (RN1-MS) received from the demultiplexer 303 and outputs the decoded the CQI (BS1-RN1) and the request information (RN1-MS) to the DL scheduler 305. The other-cell control CH decoder 319 decodes the adjacent cell resource information received from the demultiplexer 303 and outputs the decoded adjacent cell resource information to the DL scheduler 305.

The DL scheduler 305, based on the CQI (BS1-RN1) received from the own-cell control CH decoder 304, allocates wireless resources to a wireless path between the base station 111 and the relay station 121. The DL scheduler 305, based on the request information (RN1-MS) received from the own-cell control CH decoder 304 and the adjacent cell resource information received from the other-cell control CH decoder 319, allocates wireless resources to wireless paths between the relay station 121 and the mobile stations 131, 132.

For example, among the wireless resources indicated in the request information (RN1-MS), the DL scheduler 305 preferentially allocates to the wireless paths between the relay station 121 and the mobile stations 131, 132, wireless resources that are not indicated in the adjacent cell resource information. Further, configuration may be such that aside from CQI, the DL scheduler 305 allocates wireless resources, based on ID information concerning the relay station 121 and the mobile stations 131, 132; traffic information and/or quality of service (QoS) information concerning the mobile stations 131, 132, etc.

The DL scheduler 305 outputs to the control CH generator 306 and the data CH generator 309, allocation information (BS1-RN1) that indicates the wireless resources allocated to the wireless path between the base station 111 and the relay station 121. The DL scheduler 305 further outputs to the control CH generator 306, allocation information (RN1-MS) that indicates the wireless resources allocated to the wireless paths between the relay station 121 and the mobile stations 131, 132.

The control CH generator 306 assigns to a control channel (CH), the allocation information received from the DL scheduler 305 and outputs the control CH assigned allocation information to the multiplexer 311. The allocation information (BS1-RN1) and the allocation information (RN1-MS) output from the control CH generator 306 are transmitted to the relay station 121, by the transmitter 312.

The IP receiver 307 receives from the core network 101, DL data (MS1) addressed to the mobile station 131 and DL data (MS2) addressed to the mobile station 132. The IP receiver 307 outputs the received DL data to the DL buffer 308. The DL buffer 308 stores the DL data output by the IP receiver 307.

The data CH generator 309 assigns the DL data stored in the DL buffer 308 to the wireless resources indicated in the allocation information (BS1-RN1) output from the DL scheduler 305. The data CH generator 309 outputs to the multiplexer 311, the wireless resource assigned DL data. Consequently, the DL data (MS1) and the DL data (MS2) are transmitted to the relay station 121 using the wireless resources indicated in the allocation information (BS1-RN1).

The pilot generator 310 generates a pilot signal (BS1) and outputs the generated signal to the multiplexer 311. The multiplexer 311 multiplexes the allocation information output from the control CH generator 306, the DL data (MS1) and the DL data (MS2) output from the data CH generator 309, and the pilot signal (BS1) output from the pilot generator 310. The multiplexer 311 outputs the resulting multiplexed signal to the transmitter 312.

The transmitter 312 transmits, via the transmitting antenna 313, the multiplexed signal received from the multiplexer 311. The relay station 121 receives the allocation information (BS1-RN1), the allocation information (RN1-MS), the DL data (MS1), the DL data (MS2), and the pilot signal (BS1) that are included in the multiplexed signal transmitted by the transmitter 312.

### (Processing related to uplink of base station according to first embodiment)

Processing at the base station 111 and related to uplinks (UL), which transfer data from the mobile stations 131, 132 to the core network 101, will be described. Nonetheless, at the base station 112, the processing related to uplinks that transfer data from the mobile station 133 to the core network 102 is identical.

The receiver 302 receives, via the receiving antenna 301, a pilot signal (RN1) and the request information (RN1-MS) respectively transmitted by the relay station 121. The receiver 302 further receives, from the relay station 121 and via the receiving antenna 301, UL data (MS1) and UL data (MS2). The UL data (MS1) is data that is transmitted to the core network 101 by the mobile station 131. The UL data (MS2) is data that is transmitted to the core network 101 by the mobile station 132.

The receiver 302 outputs the received pilot signal (RN1), request information (RN1-MS), UL data (MS1), and UL data (MS2) to the demultiplexer 303. The receiver 302 further receives, via the receiving antenna 301, adjacent cell resource information transmitted by the relay station 122. The receiver 302 outputs the received adjacent cell resource information to the demultiplexer 303.

The demultiplexer 303 outputs the pilot signal (RN1) to the SIR measurer 314 and outputs the request information (RN1-MS) to the own-cell control CH decoder 304. The demultiplexer 303 outputs the adjacent cell resource information to the other-cell control CH decoder 319 and outputs the UL data (MS1) and the UL data (MS2) to the data CH decoder 316.

The SIR measurer 314, based on the pilot signal (RN1) received from the demultiplexer 303, measures the SIR (BS1-RN1) between the base station 111 and the relay station 121. The SIR measurer 314 outputs to the UL scheduler 315, the CQI (BS1-RN1), which indicates the measured SIR (BS1-RN1).

The own-cell control CH decoder 304 decodes the request information (RN1-MS) received from the demultiplexer 303 and outputs the decoded request information (RN1-MS) to the UL scheduler 315. The other-cell control CH decoder 319 decodes the adjacent cell resource information received from the demultiplexer 303 and outputs the decoded adjacent cell resource information to the UL scheduler 315.

The UL scheduler 315, based on the CQI (BS1-RN1) received from the SIR measurer 314, allocates wireless resources to the wireless path between the base station 111 and the relay station 121. The UL scheduler 315, based on the request information (RN1-MS) received from the own-cell control CH decoder 304 and the adjacent cell resource information received from the other-cell control CH decoder 319, allocates wireless resources to the wireless paths between the relay station 121 and the mobile stations 131, 132.

For example, among the wireless resources indicated in the request information (RN1-MS), the UL scheduler 315 preferentially allocates to the wireless paths between the relay station 121 and the mobile stations 131, 132, wireless resources that are not indicated in the adjacent cell resource information. Further, configuration may be such that aside form the CQI, the UL scheduler 315 allocates wireless resources, based on ID information concerning the relay station 121 and the mobile stations 131, 132; QoS information and/or QoS information concerning the mobile stations 131, 132, etc.

The UL scheduler 315 outputs to the control CH generator 306 and the data CH generator 309, the allocation information (BS1-RN1), which indicates the wireless resources allocated to the wireless path between the base station 111 and the relay station 121. The UL scheduler 315 further outputs to the control CH generator 306, the allocation information (RN1-MS), which indicates the wireless resources allocated to the wireless paths between the relay station 121 and the mobile stations 131, 132.

The control CH generator 306 assigns to a control CH, the allocation information received from the UL scheduler 315 and outputs the control CH assigned allocation information to the multiplexer 311. The allocation information (BS1-RN1) and the allocation information (RN1-MS) output from the control CH generator 306 is transmitted to the relay station 121, by the transmitter 312.

The data CH decoder 316 decodes the UL data (MS1) and the UL data (MS2) received from the demultiplexer 303 and outputs the decoded UL data to the UL buffer 317. The UL buffer 317 stores the UL data output by the data CH decoder 316. The IP transmitter 318 reads out the UL data stored in the UL buffer 317 and transmits the read UL data to the core network 101.

### (Configuration of relay station according to first embodiment)

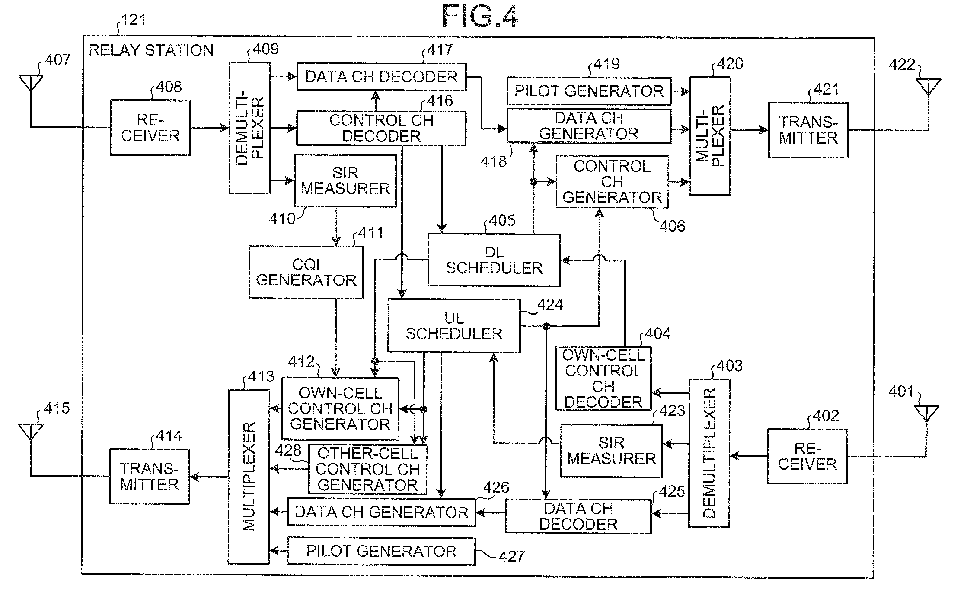

FIG. 4 is a block diagram of the relay station depicted in FIG. 1. As depicted in FIG. 4, the relay station 121 (refer to FIG. 1) includes a receiving antenna 401, a receiver 402, a demultiplexer 403, an own-cell control CH decoder 404, a DL scheduler 405, a control CH generator 406, a receiving antenna 407, a receiver 408, a demultiplexer 409, an SIR measurer 410, a CQI generator 411, an own-cell control CH generator 412, a multiplexer 413, a transmitter 414, a transmitting antenna 415, and a control CH decoder 416.

The relay station 121 further includes a data CH decoder 417, a data CH generator 418, a pilot generator 419, a multiplexer 420, a transmitter 421, a transmitting antenna 422, an SIR measurer 423, a UL scheduler 424, a data CH decoder 425, a data CH generator 426, a pilot generator 427, and an other-cell control CH generator 428. Although the relay station 121 has been described, the relay station 122 is similarly configured.

### (Processing related to downlink of relay station according to first embodiment)

Processing at the relay station 121 and related to downlinks that transfer DL data from the base station 111 to the mobile station 131 and the mobile station 132 will be described. Nonetheless, at the relay station 122, the processing related to downlinks that transfer DL data from the base station 112 to the mobile station 133 is identical.

The receiver 402 receives, via the receiving antenna 401, the CQI (RN1-MS1) transmitted by the mobile station 131 and concerning the relay station 121 and the mobile station 131. The receiver 402 further receives, via the receiving antenna 401, the CQI (RN1-MS2) transmitted by the mobile station 132 and concerning the relay station 121 and the mobile station 132.

The receiver 402 outputs the received CQIs to the demultiplexer 403. The demultiplexer 403 outputs to the own-cell control CH decoder 404, the CQIs received from the receiver 402. The own-cell control CH decoder 404 decodes the CQIs received from the demultiplexer 403 and outputs the decoded CQIs to the DL scheduler 405.

The DL scheduler 405, based on the CQI (RN1-MS1) and the CQI (RN1-MS2) received from the own-cell control CH decoder 404, determines the wireless resources to be requested for the wireless paths between the relay station 121 and the mobile stations 131, 132. For example, among the wireless resources #1-#10 (refer to FIG. 2), the DL scheduler 405 determines, as the wireless resources to be requested, wireless resources for which the CQI indicates a relatively high quality.

The DL scheduler 405 outputs to the own-cell control CH generator 412 and the other-cell control CH generator 428, the request information (RN1-MS), which indicates the determined wireless resources to be requested. The DL scheduler 405, by outputting the request information (RN1-MS) to the own-cell control CH generator 412, acquires from the control CH decoder 416, the allocation information (RN1-MS) transmitted by the base station 111. The DL scheduler 405 allocates to the wireless path between the relay station 121 and the mobile station 131 and to the wireless path between the relay station 121 and the mobile station 132, the wireless resources indicated in the acquired allocation information (RN1-MS).

The DL scheduler 405 outputs to the control CH generator 406 and the data CH generator 418, allocation information (RN1-MS1) that indicates the wireless resources allocated to the wireless path between the relay station 121 and the mobile station 131. The DL scheduler 405 further outputs to the control CH generator 406 and the data CH generator 418, allocation information (RN1-MS2) that indicates the wireless resources allocated to the wireless path between the relay station 121 and the mobile station 132.

The control CH generator 406 assigns to a control CH, the allocation information received from the DL scheduler 405 and outputs the control CH assigned allocation information to the multiplexer 420. The allocation information (RN1-MS1) output from the control CH generator 406 is transmitted to the mobile station 131, by the transmitter 421. The allocation information (RN1-MS2) output from the control CH generator 406 is transmitted to the mobile station 132, by the transmitter 421.

The receiver 408 receives, via the receiving antenna 407, the pilot signal (BS1), the allocation information (RN1-MS), the DL data (MS1), and the DL data (MS2) transmitted by the base station 111. The receiver 408 outputs to the demultiplexer 409, the received pilot signal (BS1), allocation information (RN1-MS), and DL data.

The demultiplexer 409 outputs the pilot signal (BS1) to the SIR measurer 410 and outputs the allocation information (RN1-MS) to the control CH decoder 416. The demultiplexer 409 further outputs the DL data to the data CH decoder 417.

The SIR measurer 410, based on the pilot signal (BS1) received from the demultiplexer 409, measures the SIR (BS1-RN1) between the base station 111 and the relay station 121. The SIR measurer 410 reports to the CQI generator 411, the measured SIR (BS1-RN1). The CQI generator 411 generates the CQI (BS1-RN1), which indicates the SIR (BS1-RN1) reported by the SIR measurer 410. The CQI generator 411 outputs the generated CQI (BS1-RN1) to the own-cell control CH generator 412.

The own-cell control CH generator 412 assigns to a control CH, the request information (RN1-MS) received from the DL scheduler 405 and the CQI (BS1-RN1) received from the CQI generator 411. The own-cell control CH generator 412 outputs the control CH assigned request information (RN1-MS) and CQI (BS1-RN1) to the multiplexer 413. The request information (RN1-MS) and the CQI (BS1-RN1) output from the own-cell control CH generator 412 is transmitted to the base station 111, by transmitter 414.

The other-cell control CH generator 428 assigns to a control CH, the request information (RN1-MS) received from the DL scheduler 405 and outputs the control CH assigned request information (RN1-MS) to the multiplexer 413. The request information (RN1-MS) transmitted from the other-cell control CH generator 428 is transmitted to the base station 112, by the transmitter 414.

The multiplexer 413 multiplexes the request information (RN1-MS) and the CQI (BS1-RN1) received from the own-cell control CH generator 412 and outputs the resulting multiplexed signal to the transmitter 414. The transmitter 414 transmits the received multiplexed signal to the base station 111, via the transmitting antenna 415.

The control CH decoder 416 decodes the allocation information (RN1-MS) received from the demultiplexer 409 and outputs the decoded allocation information (RN1-MS) to the DL scheduler 405 and the data CH decoder 417. The data CH decoder 417, based on the allocation information (RN1-MS) received from the control CH decoder 416, decodes the DL data (MS1) and the DL data (MS2) received from the demultiplexer 409.

The decoding at the data CH decoder 417 may use ID information concerning the mobile stations 131, 132 to which the data is addressed, and/or information such as the bit count of the data CH. Such information is, for example, reported by the base station 111 through a downlink control CH. The data CH decoder 417 outputs the decoded DL data to the data CH generator 418.

The data CH generator 418 assigns to the wireless resources indicated in the allocation information (RN1-MS1) received from the DL scheduler 405, the DL data (MS1) received from the data CH decoder 417. The data CH generator 418 outputs the wireless resource assigned DL data (MS1) to the multiplexer 420. Consequently, the DL data (MS1) is transmitted to the mobile station 131, by the wireless resources indicated in the allocation information (RN1-MS1).

The data CH generator 418 further assigns to the wireless resources indicated in the allocation information (RN1-MS2) received from the DL scheduler 405, the DL data (MS2) received from the data CH decoder 417. The data CH generator 418 outputs the wireless resource assigned DL data (MS2) to the multiplexer 420. Consequently, the DL data (MS2) is transmitted to the mobile station 132, by the wireless resources indicated in the allocation information (RN1-MS2).

The pilot generator 419 generates the pilot signal (RN1) and outputs the generated signal to the multiplexer 420. The multiplexer 420 multiplexes the allocation information (RN1-MS1) and the allocation information (RN1-MS2) received from the control CH generator 406, the DL data (MS1) and the DL data (MS2) received from the data CH generator 418, and the pilot signal (RN1) received from the pilot generator 419; and outputs the resulting multiplexed signal to the transmitter 421.

The transmitter 421 transmits the multiplexed signal to the mobile station 131, via the transmitting antenna 422. The mobile station 131 and the mobile station 132 receive the pilot signal (RN1) that is included in the multiplexed signal transmitted by the transmitter 421. The mobile station 131 receives the allocation information (RN1-MS1) and the DL data (MS1) transmitted by the transmitter 421; and the mobile station 132 receives the allocation information (RN1-MS2) and the DL data (MS2) transmitted by the transmitter 421.

### (Processing related to uplink of relay station according to first embodiment)

Processing at the relay station 121 and related to uplinks that transfer UL data from the mobile stations 131, 132 to the core network 101 will be described. Nonetheless, at the relay station 122, the processing related to uplinks that transfer UL data from the mobile station 133 to the core network 102 is identical.

The receiver 402 receives, via the receiving antenna 401, a pilot signal (MS1) transmitted by the mobile station 131 and a pilot signal (MS2) transmitted by the mobile station 132. The receiver 402 further receives, via the receiving antenna 401, the UL data (MS1) transmitted to the core network 101, by the mobile station 131 and the UL data (MS2) transmitted to the core network 101, by the mobile station 132.

The receiver 402 outputs the received pilot signals and UL data to the demultiplexer 403. The demultiplexer 403 outputs to the SIR measurer 423, the pilot signals received from the receiver 402. The demultiplexer 403 further outputs to the data CH decoder 425, the UL data received from the receiver 402.

The SIR measurer 423, based on the pilot signal (MS1) received from the demultiplexer 403, measures the SIR (RN1-MS1) between the relay station 121 and the mobile station 131. The SIR measurer 423 outputs to the UL scheduler 424, the CQI (RN1-MS1), which indicates the measured SIR (RN1-MS1). Further, the SIR measurer 423, based on the pilot signal (MS2) received from the demultiplexer 403, measures the SIR (RN1-MS2) between the relay station 121 and the mobile station 132. The SIR measurer 423 outputs to the UL scheduler 424, the CQI (RN1-MS2), which indicates the measured SIR (RN1-MS2).

The receiver 408, via the receiving antenna 407, receives the allocation information (BS1-RN1) and the allocation information (RN1-MS) transmitted by the base station 111. The receiver 408 outputs the received allocation information to the demultiplexer 409. The demultiplexer 409 outputs to the control CH decoder 416, the allocation information received from the receiver 408. The control CH decoder 416 decodes the allocation information received from the demultiplexer 409 and outputs the decoded allocation information to the UL scheduler 424.

The UL scheduler 424, based on the CQI (RN1-MS1) and the CQI (RN1-MS2) received from the SIR measurer 423, determines the wireless resources to be requested of the base station 111, for the wireless paths between the relay station 121 and the mobile stations 131, 132. For example, from among the wireless resources #1-#10 (refer to FIG. 2), the UL scheduler 424 determines, as the wireless resources to be requested, wireless resources for which the CQI indicates a relatively high quality.

The UL scheduler 424 outputs to the own-cell control CH generator 412 and the other-cell control CH generator 428, the request information (RN1-MS) which indicates the determined wireless resources to be requested. The UL scheduler 424, by outputting the request information (RN1-MS) to the own-cell control CH generator 412, acquires from the control CH decoder 416, the allocation information (RN1-MS) transmitted by the base station 111. The UL scheduler 424 allocates to the wireless path between the relay station 121 and the mobile station 131, and to the wireless path between the relay station 121 and the mobile station 132, the wireless resources indicated in the acquired allocation information (RN1-MS).

The UL scheduler 424 outputs to the control CH generator 406 and the data CH decoder 425, the allocation information (RN1-MS1), which indicates the wireless resources allocated to the wireless path between the relay station 121 and the mobile station 131. The UL scheduler 424 further outputs to the control CH generator 406 and the data CH decoder 425, the allocation information (RN1-MS2), which indicates the wireless resources allocated to the wireless path between the relay station 121 and the mobile station 132. Further, the UL scheduler 424 outputs to the data CH generator 426, the allocation information (BS1-RN1) received from the control CH decoder 416.

The own-cell control CH generator 412 assigns to a control CH, the request information (RN1-MS) received from the UL scheduler 424 and outputs the control CH assigned request information (RN1-MS) to the multiplexer 413. The request information (RN1-MS) output from the own-cell control CH generator 412 is transmitted to the base station 111, by the transmitter 414 and the transmitting antenna 415.

The other-cell control CH generator 428 assigns to a control CH, the request information (RN1-MS) received from the UL scheduler 424 and outputs the control CH assigned request information (RN1-MS) to the multiplexer 413. The request information (RN1-MS) output from the other-cell control CH generator 428 is transmitted to the base station 112, by the transmitter 414.

The control CH generator 406 assigns to a control CH, the allocation information received from the UL scheduler 424 and outputs the control CH assigned allocation information to the multiplexer 420. The allocation information (RN1-MS1) output from the control CH generator 406 is transmitted to the mobile station 131, by the transmitter 421. The allocation information (RN1-MS2) output from the control CH generator 406 is transmitted to the mobile station 132, by the transmitter 421.

The data CH decoder 425, based on the allocation information (RN1-MS1) received from the UL scheduler 424, decodes the UL data (MS1) and the UL data (MS2) received from the demultiplexer 403. The data CH decoder 425 outputs the decoded UL data to the data CH generator 426.

The data CH generator 426 allocates to the wireless resources indicated in the allocation information (BS1-RN1) received from the UL scheduler 424, the UL data received from the data CH decoder 425. The data CH generator 426 outputs the data CH assigned UL data to the multiplexer 413. The UL data output from the data CH generator 426 is transmitted to the base station 111, by the transmitter 414.

### (Configuration of mobile station according to first embodiment)

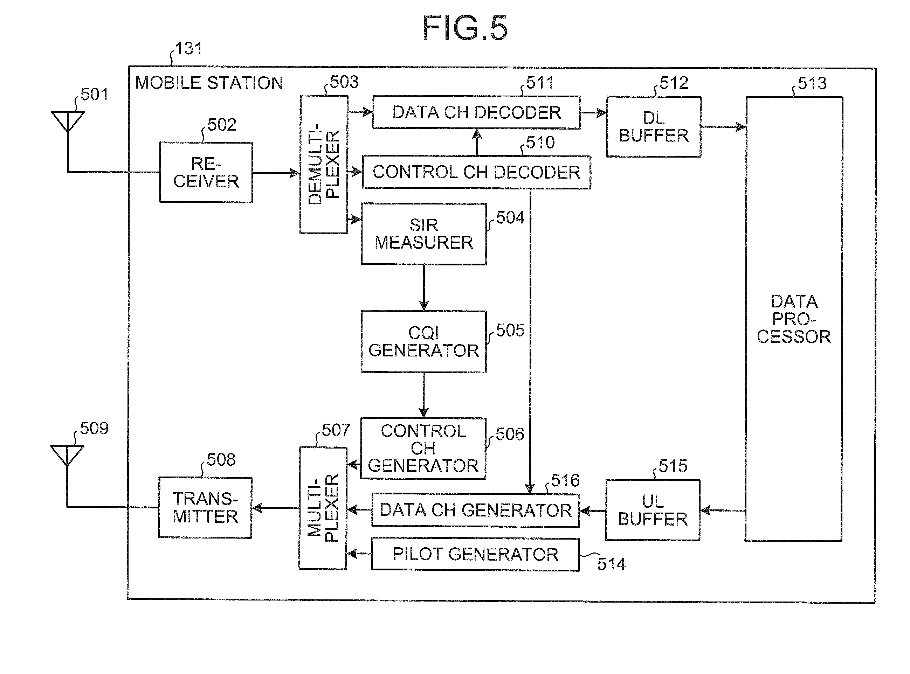

FIG. 5 is a block diagram of the mobile station depicted in FIG. 1. As depicted in FIG. 5, the mobile station 131 (refer to FIG. 1) includes a receiving antenna 501, a receiver 502, a demultiplexer 503, an SIR measurer 504, a CQI generator 505, a control CH generator 506, a multiplexer 507, a transmitter 508, a transmitting antenna 509, a control CH decoder 510, a data CH decoder 511, a DL buffer 512, and the data processor 513.

The mobile station 131 further includes a pilot generator 514, a UL buffer 515, and a data CH generator 516. Although configuration of the mobile station 131 will be described, the respective configurations of the mobile stations 132, 133 are similar.

### (Processing related to downlink of mobile station according to first embodiment)

Processing at the mobile station 131 and related to downlinks, which receive data from the core network 101, will be described. Nonetheless, the processing at the mobile station 132 and related to downlinks that receive data from the core network 101, as well as the processing at the mobile station 133 and related to downlinks that receive data from the core network 102 are identical to that at the mobile station 131.

The receiver 502, via the receiving antenna 501, receives the pilot signal (RN1), the allocation information (RN1-MS1), and the DL data (MS1) transmitted by the relay station 121. The receiver 502 outputs the received pilot signal (RN1), allocation information (RN1-MS1), and DL data (MS1) to the demultiplexer 503.

The demultiplexer 503 outputs the pilot signal (RN1) to the SIR measurer 504, outputs the allocation information (RN1-MS1) to the control CH decoder 510, and outputs the DL data (MS1) to the data CH decoder 511.

The SIR measurer 504, based on the pilot signal (RN1) received from the demultiplexer 503, measures the SIR (RN1-MS1) in the wireless path between the relay station 121 and the mobile station 131. The SIR measurer 504 reports to the CQI generator 505, the measured the SIR (RN1-MS1). The CQI generator 505 generates the CQI (RN1-MS1), which indicates the SIR (RN1-MS1) reported by the SIR measurer 504, and outputs the generated the CQI (RN1-MS1) to the control CH generator 506.

The control CH generator 506 assigns to a control CH, the CQI (RN1-MS1) received from the CQI generator 505 and outputs the control CH assigned CQI (RN1-MS1) to the multiplexer 507. The CQI (RN1-MS1) output by the control CH generator 506 is transmitted to the relay station 121, by the transmitter 508.

The multiplexer 507 multiplexes the CQI (RN1-MS1) received from the control CH generator 506, the UL data (MS1) received from the data CH generator 516, and the pilot signal (MS1) received from the pilot generator 514. The multiplexer 507 outputs the resulting multiplexed signal to the transmitter 508. The transmitter 508 transmits the multiplexed signal to the relay station 121, via the transmitting antenna 509.

The control CH decoder 510 decodes the allocation information (RN1-MS1) received from the demultiplexer 503 and outputs the decoded allocation information (RN1-MS1) to the data CH decoder 511. The data CH decoder 511, based on the allocation information (RN1-MS1) received from the control CH decoder 510, decodes the DL data (MS1) received from the demultiplexer 503. The data CH decoder 511 outputs the decoded DL data (MS1) to the DL buffer 512.

The DL buffer 512 stores the DL data (MS1) output by the data CH decoder 511. The data processor 513 reads out the DL data (MS1) stored in the DL buffer 512 and performs various types of processing using the DL data (MS1).

### (Processing related to uplink of mobile station according to first embodiment)

Processing at the mobile station 131 and related to uplinks that transmit data to the core network 101 will be described. Nonetheless, the process at the mobile station 132 and related to uplinks that transmit data to the core network 101 and the processing at the mobile station 133 and related to uplinks that transmit data to the core network 102 are identical to that at the mobile station 131. The pilot generator 514 generates the pilot signal (MS1) and outputs the generated pilot signal (MS1) to the multiplexer 507.

The data processor 513 generates the UL data (MS1) addressed to the core network 101 and outputs the generated UL data (MS1) to the UL buffer 515. The UL buffer 515 stores the UL data (MS1) output by the data processor 513. The control CH decoder 510 outputs the allocation information (RN1-MS1) to the data CH generator 516.

The data CH generator 516 assigns the UL data (MS1) stored in the UL buffer 515, to the wireless resources indicated in the allocation information (RN1-MS1) received from the control CH decoder 510. The data CH generator 516 outputs the wireless resource assigned UL data (MS1) to the multiplexer 507. The UL data (MS1) output by the data CH generator 516 is transmitted to the relay station 121, by the transmitter 508.

### (Operation example of communication system according to first embodiment)

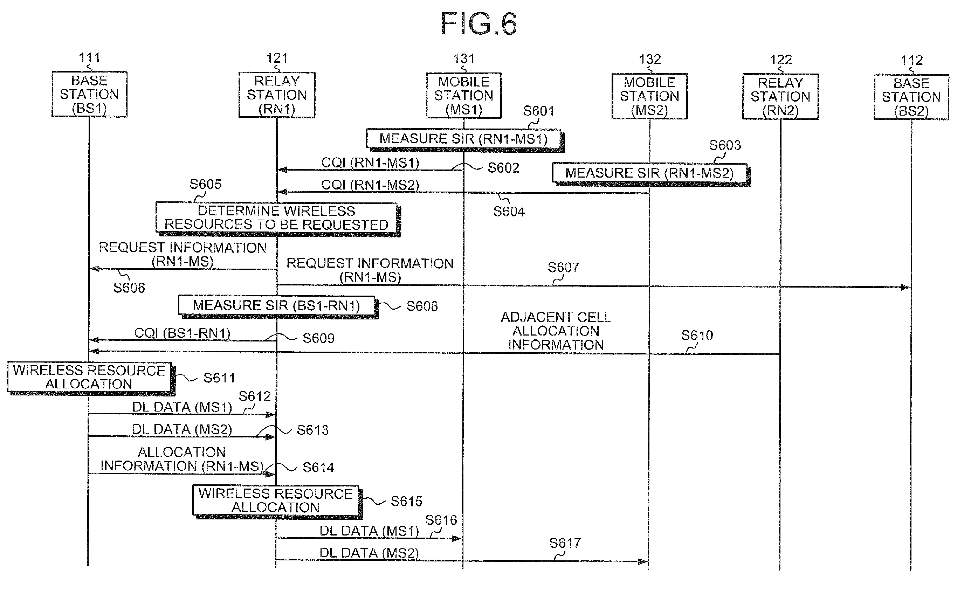

FIG. 6 is a sequence diagram of an example of downlink operation of the communication system depicted in FIG. 1. Although downlink operation at the communication system 100, from the base station 111 to the mobile stations 131, 132 will be described, the downlink operation from the base station 112 to the mobile station 133 is identical.

The mobile station 131 measures the SIR (RN1-MS1) in the wireless path between the relay station 121 and the mobile station 131 (step S601). The mobile station 131 uses the control CH and transmits to the relay station 121, the CQI (RN1-MS1), which indicates the SIR (RN1-MS1) measured at step S601 (step S602).

The mobile station 132 measures the SIR (RN1-MS2) in the wireless path between the relay station 121 and the mobile station 132 (step S603). The mobile station 132, uses the control CH and transmits to the relay station 121, the CQI (RN1-MS2), which indicates the SIR (RN1-MS2) measured at step S603 (step S604).

The relay station 121, based on the CQIs transmitted at step S602 and step S604, determines the wireless resources to be requested (step S605). The relay station 121 uses the control CH and transmits to the base station 111, the request information (RN1-MS), which indicates the wireless resources determined at step S605 (step S606).

The relay station 121 uses the control CH and transmits to the base station 112, the request information (RN1-MS) that indicates the wireless resources determined at step S605 (step S607). The request information (RN1-MS) transmitted at step S607, from the perspective of the base station 112, is adjacent cell resource information transmitted by the relay station 121, which is the relay station of an adjacent cell.

The relay station 121 measures the SIR (BS1-RN1) in the wireless path between the base station 111 and the relay station 121 (step S608). The relay station 121 uses the control CH and transmits to the base station 111, the CQI (BS1-RN1), which indicates the SIR (BS1-RN1) measured at step S608 (step S609).

The base station 111 receives by the control CH, the adjacent cell resource information transmitted by the relay station 122 (step S610). The adjacent cell resource information received at step S610 is the request information also transmitted to the base station 111 and indicating the wireless resources that the relay station 122 requests the base station 112 to allocate.

The base station 111 performs wireless resource allocation (step S611). At step S611, based on the CQI (BS1-RN1) transmitted at step S609, wireless resources are allocated to the wireless path between the base station 111 and the relay station 121. Further, at step S611, among the wireless resources indicated in the request information (RN1-MS) transmitted at step S606, wireless resources that are not indicated in the adjacent cell resource information transmitted at step S610, are preferentially allocated to the wireless paths between the relay station 121 and the mobile stations 131, 132.

The base station 111 transmits to the relay station 121, the DL data (MS1) addressed to the mobile station 131 (step S612). The base station 111 transmits to the relay station 121, the DL data (MS2) addressed to the mobile station 132 (step S613). At steps S612, S613, the DL data is transmitted using the wireless resources allocated, at step S611, to the wireless path between the base station 111 and the relay station 121.

The base station 111 uses the control CH and transmits the allocation information (RN1-MS) to the relay station 121 (step S614). The allocation information (RN1-MS) transmitted at step S614 is allocation information that indicates the wireless resources allocated to the wireless paths between the relay station 121 and the mobile stations 131, 132 at step S611.

The relay station 121 allocates to the wireless path between the relay station 121 and the mobile station 131 and to the wireless path between the relay station 121 and the mobile station 132, the wireless resources indicated in the allocation information (RN1-MS) transmitted at step S614 (step S615). At step S615, for example, the wireless resource allocation is performed based on the CQIs transmitted at step S602 and step S604.

The relay station 121 transmits to the mobile station 131, the DL data (MS1) transmitted at step S612 (step S616). At step S616, the DL data (MS1) is transmitted using the wireless resources allocated, at step S615, to the wireless path between the relay station 121 and the mobile station 131.

The relay station 121 transmits to the mobile station 132, the DL data (MS2) transmitted at step S613 (step S617), ending the series of operations. At step S617, the DL data (MS2) is transmitted using the wireless resources allocated, at step S615, to the wireless path between the relay station 121 and the mobile station 132.

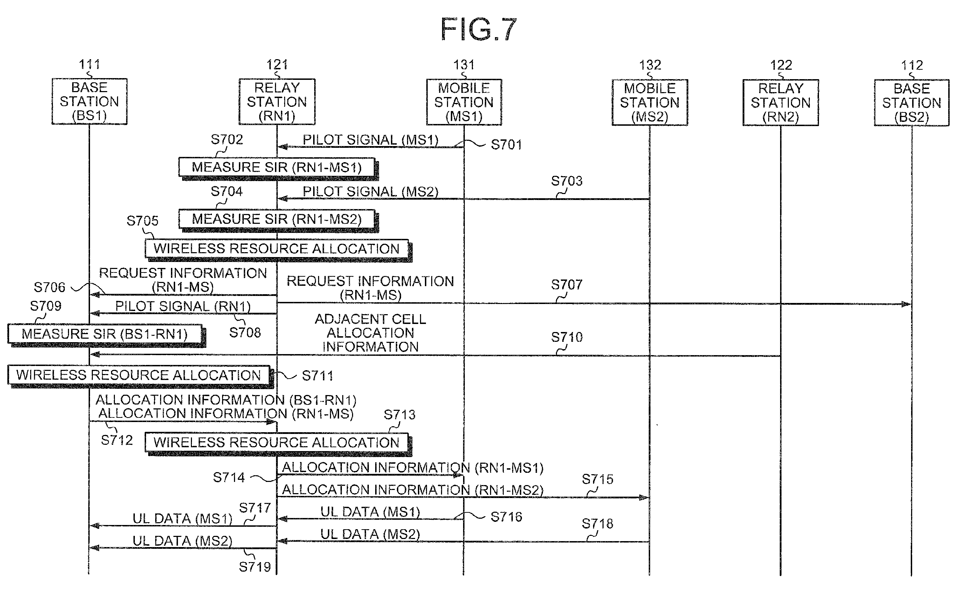

FIG. 7 is a sequence diagram of uplink operation of the communication system depicted in FIG. 1. Although uplink operation in the communication system 100, from the mobile stations 131, 132 to the base station 111 will be described, the uplink operation from the mobile station 133 to the base station 112 is identical.

The mobile station 131 transmits the pilot signal (MS1) to the relay station 121 (step S701). The relay station 121, based on the pilot signal (MS1) transmitted at step S701, measures the SIR (RN1-MS1) in the wireless path between the relay station 121 and the mobile station 131 (step S702).

The mobile station 132 transmits the pilot signal (MS2) to the relay station 121 (step S703). The relay station 121, based on the pilot signal (MS2) transmitted at step S703, measures the SIR (RN1-MS2) in the wireless path between the relay station 121 and the mobile station 132 (step S704).

The relay station 121, based on the SIRs measured at step S702 and step S704, determines the wireless resources to be requested (step S705). The relay station 121 uses the control CH and transmits to the base station 111, the request information (RN1-MS) indicating the wireless resources determined at step S705 (step S706).

The relay station 121 uses the control CH and transmits to the base station 112, the request information (RN1-MS) indicating the wireless resources determined at step S705 (step S707). The request information (RN1-MS) transmitted at step S707, from the perspective of the base station 112, is adjacent cell resource information transmitted from the relay station 121, which is the relay station of an adjacent cell.

The relay station 121 transmits the pilot signal (RN1) to the base station 111 (step S708). The base station 111, based on the pilot signal (RN1) transmitted at step S708, measures the SIR (BS1-RN1) in the wireless path between the base station 111 and the relay station 121 (step S709).

The base station 111 receives by the control CH, the adjacent cell resource information transmitted by the relay station 122 (step S710). The adjacent cell resource information received at step S710 is the request information also transmitted to the base station 111 and indicating the wireless resources that the relay station 122 requests the base station 112 to allocate.

The base station 111 performs wireless resource allocation (step S711). At step S711, wireless resources are allocated to the wireless path between the base station 111 and the relay station 121, based on the SIR (BS1-RN1) measured at step S709. At step S711, among the wireless resources indicated in the request information (RN1-MS) transmitted at step S706, wireless resources that are not indicated in the adjacent cell resource information transmitted at step S710 are preferentially allocated to the wireless paths between the relay station 121 and the mobile stations 131, 132.

The base station 111 uses the control CH and transmits the allocation information (BS1-RN1) and the allocation information (RN1-MS) to the relay station 121 (step S712). The allocation information (BS1-RN1) is allocation information that indicates the wireless resources allocated to the wireless path between the base station 111 and the relay station 121 at step S711. The allocation information (RN1-MS) is allocation information that indicates the wireless resources allocated to the wireless paths between the relay station 121 and the mobile stations 131, 132 at step S711.

The relay station 121 allocates to the wireless path between the relay station 121 and the mobile station 131, and to the wireless path between the relay station 121 and the mobile station 132, the wireless resources indicated in the allocation information (RN1-MS) transmitted at step S712 (step S713). At step S713, for example, the wireless resource allocation is performed based on the SIRs measured at step S702 and step S704.

The relay station 121 transmits to the mobile station 131, the allocation information (RN1-MS1) indicating the wireless resources allocated to the wireless path between the relay station 121 and the mobile station 131, at step S713 (step S714). The relay station 121 transmits to the mobile station 132, the allocation information (RN1-MS2) indicating the wireless resources allocated to the wireless path between the relay station 121 and the mobile station 132, at step S713 (step S715).

The mobile station 131 transmits the UL data (MS1) to the relay station 121, by the wireless resources indicated in the allocation information (RN1-MS1) transmitted at step S714 (step S716). The relay station 121 uses the wireless resources indicated in the allocation information (BS1-RN1) transmitted at step S712 and transmits to the base station 111, the UL data (MS1) transmitted at step S716 (step S717).

The mobile station 132 uses the wireless resources indicated in the allocation information (RN1-MS2) transmitted at step S715 and transmits the UL data (MS2) to the relay station 121 (step S718). The relay station 121 uses the wireless resources indicated in the allocation information (BS1-RN1) transmitted at step S712 and transmits to the base station 111, the UL data (MS2) transmitted at step S718 (step S719), ending the series of operations.

As depicted in FIGS. 6 and 7, the base station 111 receives, as adjacent cell resource information, the request information indicating the wireless resources that the relay station 122 requests the base station 112 of the cell 112a to allocate. The base station 111 preferentially allocates to the wireless paths between the relay station 121 and the mobile stations 131, 132, wireless resources that are not indicated in the adjacent cell resource information, whereby wireless resources having a low potential of being affected by communication interference by the relay station 122 can be allocated to the relay station 121 located near the cell border.

### (Example of SIR)

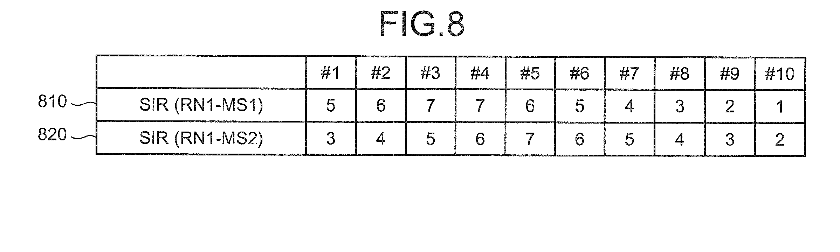

FIG. 8 is a diagram of an example of SIR in wireless paths between the relay station and the mobile stations. SIR 810 depicted in FIG. 8 is the SIR (RN1-MS1) in the wireless path between the relay station 121 and the mobile station 131. SIR 820 is the SIR (RN1-MS2) in the wireless path between the relay station 121 and the mobile station 132.

In downlinks (for example, refer to FIG. 6), the relay station 121 acquires the SIR 810 by receiving the CQI (RN1-MS1) from the mobile station 131 and further acquires the SIR 820 by receiving the CQI (RN1-MS2) from the mobile station 132. In uplinks (for example, refer to FIG. 7), the relay station 121 measures the SIR 810, based on the pilot signal (MS1) transmitted by the mobile station 131, and further measures the SIR 820, based on the pilot signal (MS2) transmitted by the mobile station 132.

The values indicated by the SIR 810 and the SIR 820 indicate the SIR at each of the wireless resources #1-#10. In this manner, the relay station 121 acquires each SIR for multiple wireless resources. Here, the SIR values are depicted simplified as "1" to "7", where the greater the value is, the better the communication quality is.

### (Example of request information)

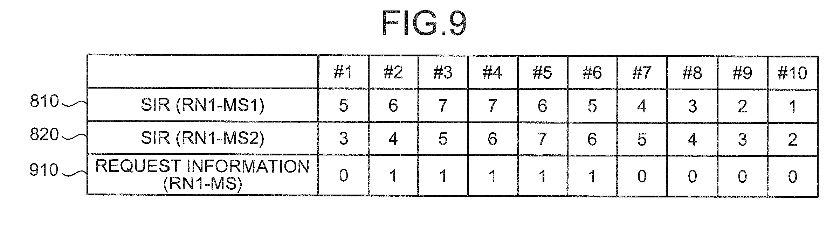

FIG. 9 is a diagram of an example of request information transmitted by a relay station. In FIG. 9, parts identical to those depicted in FIG. 8 are given the same reference numerals used in FIG. 8 and description thereof is omitted. Request information 910 is the request information (RN1-MS) indicating the wireless resources determined by the relay station. In the request information 910, "1" indicates a wireless resource to be requested of the base station 111 and "0" indicates a wireless resource that is not to be requested of the base station 111.

The relay station 121, for example, among the wireless resources #1-#10, preferentially determines, as wireless resources to be requested, wireless resources for which the SIR 810 and SIR 820 values are high. For example, the relay station 121 determines wireless resources whose combined SIR 810 and SIR 820 is 10 or greater. In this example, as depicted in the request information 910, the wireless resources to be requested are the wireless resources #2-#6. The request information 910 is transmitted to the base station 111.

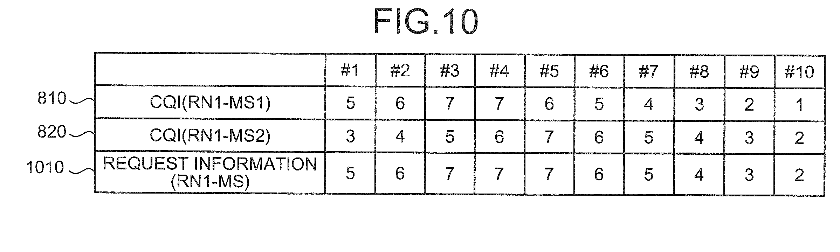

FIG. 10 is a diagram of another example of request information. In FIG. 10, parts identical to those depicted in FIG. 9 are given the same reference numerals used in FIG. 9 and description thereof is omitted. The request information (RN1-MS) transmitted to the base station 111 by the relay station 121 may be configured like request information 1010 depicted in FIG. 10.

The values of the request information 1010 indicate priority levels of the wireless resources to be requested of the base station 111, where the greater the value is, the higher the priority is. The relay station 121, for example, respectively compares the SIR 810 and the SIR 820 among the wireless resources #1-#10 and determines those with large SIRs as the request information 1010. The request information 1010 is transmitted to the base station 111.

### (Example of wireless resource)

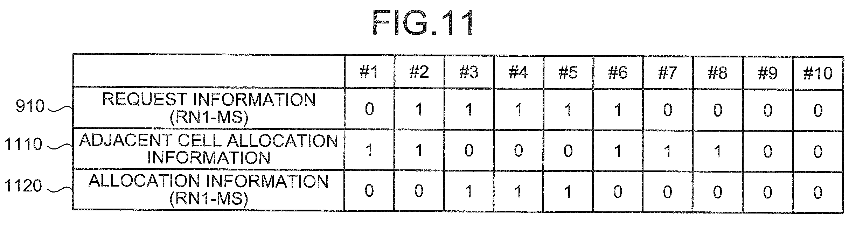

FIG. 11 is a diagram of a wireless resource allocated by the base station. In FIG. 11, parts identical to those depicted in FIG. 9 are given the same reference numerals used in FIG. 9 and description thereof is omitted. Here, an example will be described where the request information (RN1-MS) transmitted to the base station 111 by the relay station 121 is the request information 910 depicted in FIG. 9.

Adjacent cell resource information 1110 is the adjacent cell resource information transmitted to the base station 111 by the relay station 122. In the adjacent cell resource information 1110, "1" indicates a wireless resource that is requested of the base station 111, by the relay station 122 and "0" indicates a wireless resource that is not requested of the base station 111, by the relay station 122.

In this example, the adjacent cell resource information 1110 indicates the wireless resources #1, #2, #6-#8 to be wireless resources requested of the base station 111 by the relay station 122. The base station 111, among the wireless resources #2-#6 indicated in the request information 910, preferentially allocates to the wireless paths between the relay station and the respective mobile stations, the wireless resources that are not the wireless resources #1, #2, #6-#8 indicated in the adjacent cell resource information 1110. Here, the base station 111 allocates the wireless resources #3-#5 to the wireless paths between the relay station 121 and the respective mobile stations.

Allocation information 1120 is the allocation information (RN1-MS) transmitted to the relay station 121 by the base station 111. In the allocation information 1120, "1" indicates a wireless resource allocated to the wireless paths between the relay station 121 and the respective mobile stations and "0" indicates a wireless resource not allocated to the wireless paths between the relay station 121 and the respective mobile stations.

The allocation information 1120 is transmitted to the relay station 121. The relay station 121 allocates the wireless resources #3-#5 indicated in the allocation information 1120 to the wireless path between the relay station 121 and the mobile station 131 and the wireless path between the relay station 121 and the mobile station 132. For example, the relay station 121 allocates the wireless resources #3, #4 to the wireless path between the relay station 121 and the mobile station 131 and allocates the wireless resource #5 to the wireless path between the relay station 121 and the mobile station 132.

Although the request information (RN1-MS) transmitted to the base station 111 by the relay station 121 has been described as the request information 910 depicted in FIG. 9, the request information (RN1-MS) may be the request information 1010 depicted in FIG. 10. In this case, configuration may be such that among the wireless resources that are not the wireless resources #1, #2, #6-#8 indicated in the adjacent cell resource information 1110, the base station 111 preferentially allocates to the wireless paths between the relay station 121 and the respective mobile stations, wireless resources whose priority level indicated in the request information 1010 is high.

For example, among the wireless resources that are not the wireless resources #1, #2, #6-#8 indicated in the adjacent cell resource information 1110, the base station 111 allocates to the wireless paths between the relay station 121 and the respective mobile stations, wireless resources whose priority level indicated in the request information 1010 is 6 or greater. In this case, the allocation information (RN1-MS), which indicates the wireless resources allocated to the wireless path between the relay station 121 and the respective mobile stations becomes like the allocation information 1120.

### (Operation example of communication system according to first embodiment)

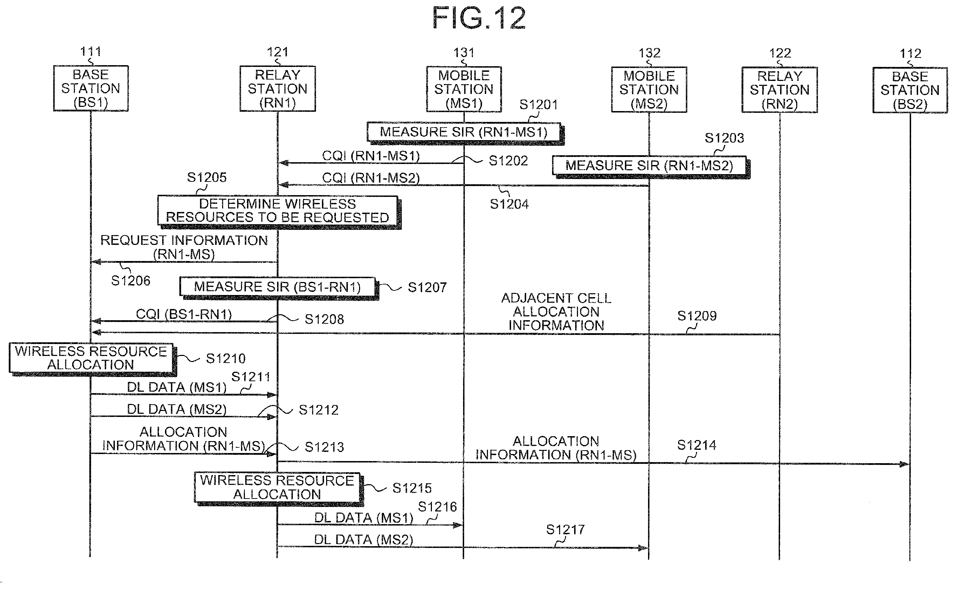

FIG. 12 is a sequence diagram of another example of the downlink operation depicted in FIG. 6. Steps S1201-S1213 depicted in FIG. 12 are identical to steps S601-S606, and steps S608-S614 depicted in FIG. 6 and description thereof is omitted. However, the adjacent cell resource information received at step S1209 is the allocation information that is transmitted to the relay station 122 by the base station 112 and transmitted by the relay station 122 to the base station 111.

After step S1213, the relay station 121 uses the control CH and transmits to the base station 112, the allocation information (RN1-MS) transmitted at step S1213 (step S1214). The allocation information (RN1-MS) transmitted at step S1214, from the perspective of the base station 112, is the adjacent cell resource information from the relay station 121, which is a relay station of an adjacent cell. Steps S1215-S1217 depicted in FIG. 12 are identical to steps S615-S617 depicted in FIG. 6 and description therefor is omitted.

At step S1214, the DL scheduler 405 depicted in FIG. 4 outputs to the other-cell control CH generator 428, the allocation information (RN1-MS) output by the control CH decoder 416. The other-cell control CH generator 428 assigns to a control CH, the allocation information (RN1-MS) received from the DL scheduler 405 and outputs the control CH assigned allocation information (RN1-MS) to the multiplexer 413. The allocation information (RN1-MS) output from the other-cell control CH generator 428 is transmitted to the base station 112, by the transmitter 414.

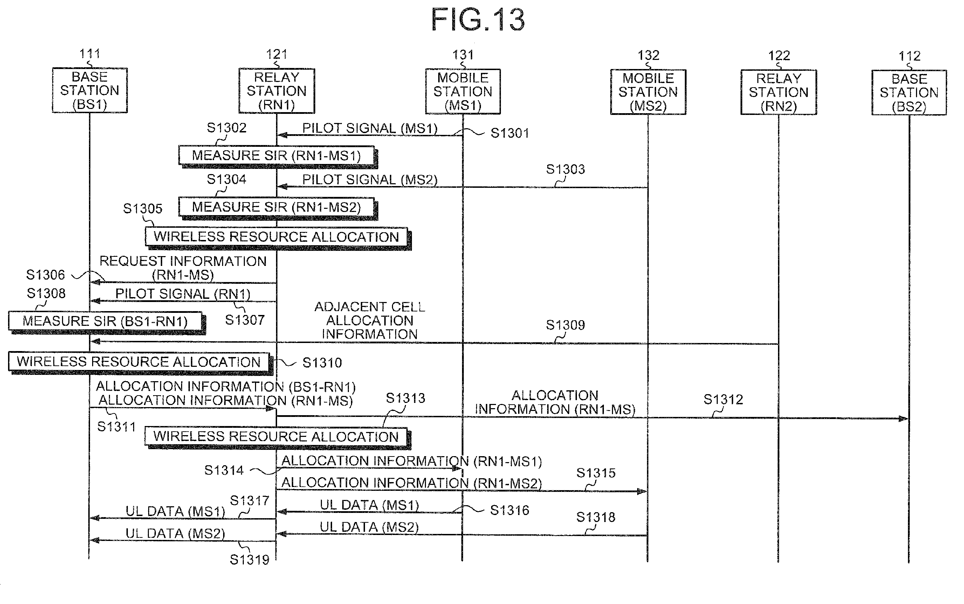

FIG. 13 is a sequence diagram of another example of the uplink operation depicted in FIG. 7. Steps S1301-S1311 depicted in FIG. 13 are identical to steps S701-S706 and steps S708-S712 depicted in FIG. 7 and description thereof is omitted. However, the adjacent cell resource information received at step S1309 is the allocation information transmitted by the base station 112 to the relay station 122 and transmitted by the relay station 122 to the base station 111.

After step S1311, the relay station 121 uses the control CH and transmits to the base station 112, the allocation information (RN1-MS) transmitted at step S1311 (step S1312). The allocation information (RN1-MS) transmitted at step S1312, from the perspective of the base station 112, is the adjacent cell resource information from the relay station 121, which is a relay station of an adjacent cell. Steps S1313-S1319 depicted in FIG. 13 are identical to steps S713-S719 depicted in FIG. 7 and description thereof is omitted.

At step S1312, the UL scheduler 424 depicted in FIG. 4 outputs to the other-cell control CH generator 428, the allocation information (RN1-MS) output by the control CH decoder 416. The other-cell control CH generator 428 assigns to a control CH, the allocation information (RN1-MS) received from the UL scheduler 424 and outputs the control CH assigned allocation information (RN1-MS) to the multiplexer 413. The allocation information (RN1-MS) output by the other-cell control CH generator 428 is transmitted to the base station 112, by the transmitter 414.

As depicted in FIGS. 12 and 13, the base station 111 receives, as adjacent cell resource information, the allocation information indicating the wireless resources allocated to the relay station 122 by the base station of the cell 112a (adjacent cell). The base station 111 preferentially allocates to the wireless paths between the relay station 121 and the mobile stations 131, 132, wireless resources that are not indicated in the adjacent cell resource information, whereby wireless resources having a potential of being affected by communication interference by the relay station 122 can be allocated to the relay station 121 located near the border of the cell 122a.

In this manner, according to the base station 111 of the first embodiment, wireless resources having a low potential of being affected by communication interference by the relay station 122 (adjacent-cell relay station) can be allocated to wireless paths of the relay station 121 located near the border between the cell 111a and the cell 112a. Consequently, throughput in a vicinity of the border between the cell 111a and the cell 112a can be improved, whereby, for example, the overall throughput of the cell 111a can be equalized.

Further, request information (or allocation information) from the relay station 122, which is provided in the cell 112a and near the border with the cell 111a, to the base station 111 is transmitted as adjacent cell resource information, enabling the above effects to be achieved. In general, since the number of relay stations (e.g., the relay station 122) near a border relative to the total number of relay stations in the cell 112a is small, the adjacent cell resource information can be transmitted by newly setting few control CHs. Therefore, the above effects can be achieved without large changes to the communication system.

In the first embodiment, a configuration is assumed in which adjacent cell resource information is exchanged between the cell 111a and the cell 112a; and at the base station 111 and the base station 112, respectively, wireless resource allocation is performed that takes into consideration the adjacent cell resource information. Therefore, at the cell 112a, the above effects described with respect to the cell 111a can also be achieved.

However, any one among the configuration of transmitting adjacent cell resource information from the cell 111a to the cell 112a and the configuration of transmitting adjacent cell resource information from the cell 112a to the cell 111a can be omitted. For example, the configuration of transmitting adjacent cell resource information from the relay station 121 to the base station 112 can be omitted. In this case, at the base station 112, wireless resource allocation is performed that does not take into consideration the adjacent cell resource information. Nonetheless, at cell 111a, the above effects can be achieved.

### (Second embodiment)

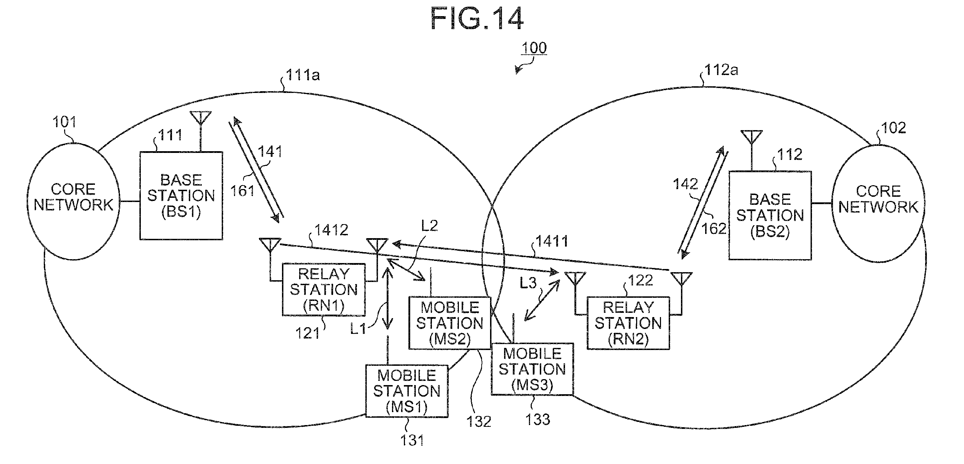

FIG. 14 is a diagram of a configuration of the communication system according to a second embodiment. In FIG. 14, components identical to those depicted in FIG. 1 are given the same reference numerals used in FIG. 1 and description thereof is omitted. In the second embodiment, the relay station 121 further transmits (reference character 1411) to the relay station 122, the request information transmitted (reference character 141) to the base station 111. In this case, the relay station 121 can omit transmitting request information to the base station 112.

The relay station 121 receives from the relay station 122 (adjacent-cell relay station), which is in the cell 112a (adjacent cell) and near the border with the cell 111a (of the relay station 121), adjacent cell resource information (reference character 1412) indicating the wireless resources allocated to the relay station 122. The relay station 121 preferentially uses wireless resources that are not indicated in the received adjacent cell resource information and wirelessly communicates with the mobile stations 131, 132, respectively.

For example, as wireless resources to be requested for allocation, the relay station 121 preferentially determines wireless resources that are not indicated in the received adjacent cell resource information and transmits to the base station 111, request information (reference character 141) indicating the determined wireless resources. The relay station 121 wirelessly communicates with the mobile stations 131, 132, respectively, using the wireless resources indicated in the allocation information (reference character 161) transmitted by the base station 111 in response to the request information.

The base station 111 receives request information (reference character 141) transmitted by the relay station 121. The base station 111, from among the wireless resources indicated in the request information (reference character 141), determines the wireless resources to be allocated to the wireless path L1 and the wireless path L2. The base station 111 transmits to the relay station 121, the allocation information (reference character 161) indicating the determined wireless resources.

The base station 112 and the relay station 122 will be described. The relay station 122 further transmits (reference character 1412) to the relay station 121, the request information transmitted (reference character 142) to the base station 112. In this case, the relay station 122 can omit transmitting request information to the base station 111.

The relay station 122 receives from the relay station 121 (adjacent-cell relay station), which is in the cell 111a (adjacent cell) and near the border with the cell 112a (of the relay station 122), adjacent cell resource information (reference character 1411) indicating the wireless resources allocated to the relay station 121. The relay station 122 preferentially uses wireless resources that are not indicated in the received adjacent cell resource information and wirelessly communicates with the mobile station 133.

For example, as wireless resources to be requested for allocation, the relay station 122 preferentially determines wireless resources that are not indicated in the received adjacent cell resource information and transmits to the base station 112, request information (reference character 142) indicating the determined wireless resources. The relay station 122 wirelessly communicates with the mobile station 133, using the wireless resources indicated in the allocation information (reference character 162) transmitted by the base station 112 in response to the request information.

For example, if another condition concerning the wireless resource is the same, the relay station 122, as wireless resources to be requested, determines wireless resources that are not indicated in the received adjacent cell resource information. An example of a condition in such a case is communication quality, such as SIR. Configuration may be such that among the wireless resources that are not indicated in the received adjacent cell resource information, the relay station 122, as the wireless resources to be requested, determines wireless resources that satisfy another condition, such as SIR communication quality that is greater than or equal to a threshold, communication quality that is higher than a given level, etc.

In this manner, configuration may be such that the relay station 122 acquires the communication quality for a wireless path between the relay station 122 and the mobile station 133 and based on the acquired communication quality, determines the wireless resources to be requested, from among wireless resource not indicated in the adjacent cell resource information.

The base station 112 receives request information (reference character 142) transmitted by the relay station 122. The base station 112 determines the wireless resources to be allocated to the wireless path L3, from among the wireless resources indicated in the request information (reference character 142). The base station 112 transmits to the relay station 122, allocation information (reference character 162) indicating the determined wireless resources. The wireless resources in the communication system depicted in FIG. 14 are identical to the wireless resources depicted in FIG. 2 and description thereof is omitted.

### (Configuration of base station according to second embodiment)

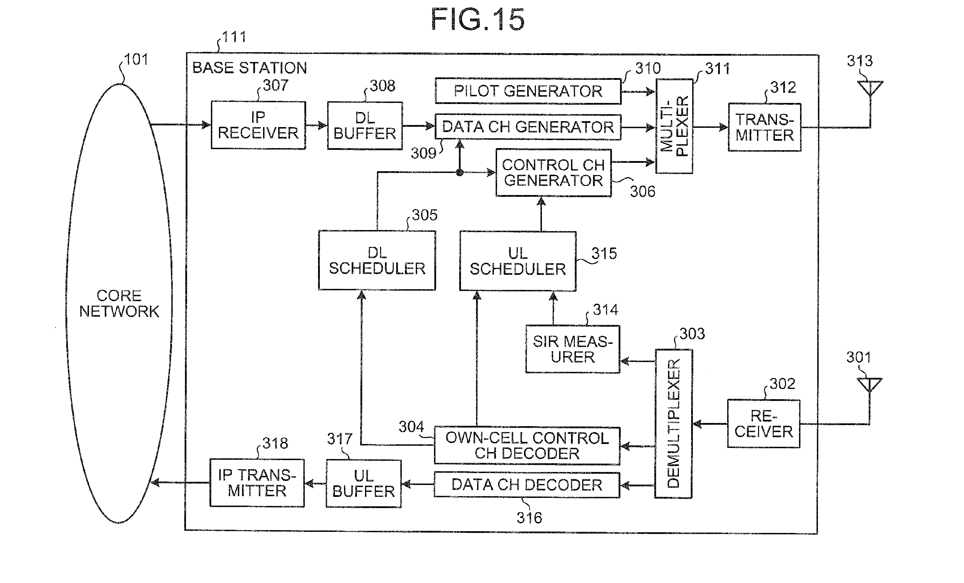

FIG. 15 is a block diagram of the base station depicted in FIG. 14. In FIG. 15, components identical to those depicted in FIG. 3 are given the same reference numerals used in FIG. 3 and description thereof is omitted. As depicted in FIG. 15, the base station 111 (refer to FIG. 14) according to the second embodiment may be of the configuration depicted in FIG. 3, less the other-cell control CH decoder 319.

### (Processing related to downlink of base station according to second embodiment)

Processing at the base station 111 and related to downlinks that transfer DL data from the core network 101 to the mobile station 131 and the mobile station 132 will be described. Nonetheless, at the base station 112, the processing related to downlinks that transfer DL data from the core network 102 to the mobile station 133 is identical. The receiver 302 may omit receiving the adjacent cell resource information (refer to FIG. 3) transmitted by the relay station 122 of the cell 112a. In this case, the adjacent cell resource information is not input to the DL scheduler 305.

The DL scheduler 305, based on the request information (RN1-MS) received from the own-cell control CH decoder 304, allocates wireless resources to the wireless paths between the relay station 121 and the mobile stations 131, 132.

### (Processing related to uplink of base station according to second embodiment)

Processing at the base station 111 and related to uplinks that transfer UL data from the mobile stations 131, 132 to the core network 101 will be described. Nonetheless, at the base station 112, the processing related to uplinks that transfer UL data from the mobile station 133 to the core network 102 is identical. The receiver 302 may omit receiving the adjacent cell resource information (refer to FIG. 3) transmitted by the relay station 122 of the cell 112a. In this case, the adjacent cell resource information is not input to the UL scheduler 315.

The UL scheduler 315, based on the request information (RN1-MS) received from the own-cell control CH decoder 304, allocates wireless resources to the wireless paths between the relay station 121 and the mobile stations 131, 132.

### (Configuration of relay station according to second embodiment)

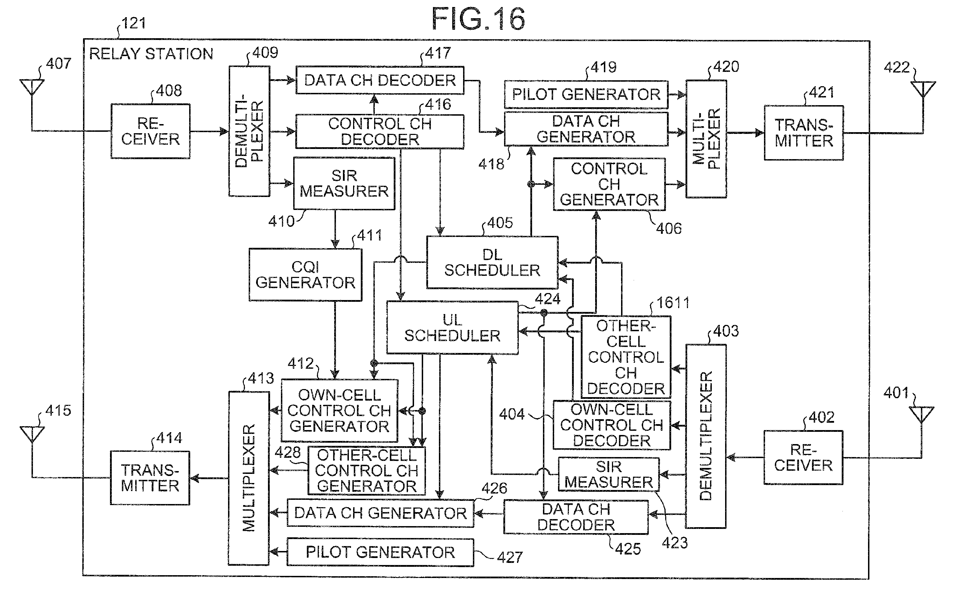

FIG. 16 is a block diagram of the relay station depicted in FIG. 14. In FIG. 16, components identical to those depicted in FIG. 4 are given the same reference numerals used in FIG. 4 and description thereof is omitted. As depicted in FIG. 16, the relay station 121 (refer to FIG. 14) according to the second embodiment, includes an other-cell control CH decoder 1611 in addition to the configuration depicted in FIG. 4. Although configuration of the relay station 121 will be described, the configuration of the relay station 122 is identical.

The receiving antenna 401 and the receiver 402 form a receiving unit that receives from the relay station 122 (adjacent-cell relay station) in the cell 112a (adjacent cell) and near the border with the cell 111a (of the relay station 121), adjacent cell resource information indicating the wireless resources allocated to the relay station 122. The receiving antenna 401, the receiver 402, the transmitter 421, and the transmitting antenna 422 form a communications unit that uses wireless resources that are not indicated in the adjacent cell resource information received by the receiving unit and wirelessly communicates with the mobile stations 131, 132.

The DL scheduler 405 and the UL scheduler 424 form a determining unit that as wireless resources to be requested for allocation to the wireless paths between the relay station 121 and the mobile stations 131, 132, preferentially determines wireless resources that are not indicated in the adjacent cell resource information. The DL scheduler 405 and the UL scheduler 424, for example, are implemented by a computing unit such as a CPU.

The transmitter 414 and the transmitting antenna 415 form a transmitting unit that transmits to the base station 111, request information indicating the wireless resources determined by determining unit. The receiving antenna 407 and the receiver 408 form a second receiving unit that receives allocation information indicating the wireless resources allocated by the base station 111 according to the request information transmitted by the transmitting unit.

### (Processing related to downlink of relay station according to second embodiment)

Processing at the relay station 121 and related to downlinks that transfer DL data from the core network 101 to the mobile station 131 and the mobile station 132 will be described. Nonetheless, at the relay station 122, the processing related to downlinks that transfer DL data from the core network 102 to the mobile station 133 is identical.

The receiver 402 receives, via the receiving antenna 401, the adjacent cell resource information transmitted by the relay station 122. The receiver 402 outputs the received adjacent cell resource information to the demultiplexer 403. The demultiplexer 403 outputs to the other-cell control CH decoder 1611, the adjacent cell resource information received from the receiver 402. The other-cell control CH decoder 1611 decodes the adjacent cell resource information received from the demultiplexer 403. The other-cell control CH decoder 1611 outputs the decoded adjacent cell resource information to the DL scheduler 405.

The DL scheduler 405, based on the adjacent cell resource information received from the other-cell control CH decoder 1611, determines the wireless resources to be requested of the base station 111, for the wireless paths between the relay station 121 and the mobile stations 131, 132. For example, as wireless resources to be requested, the DL scheduler 405 preferentially determines wireless resources that are not indicated in the adjacent cell resource information. For example, among the wireless resources #1-#10 (refer to FIG. 2), the DL scheduler 405, determines, as the wireless resources to be requested, wireless resources that are not indicated in the adjacent cell resource information and for which the CQI indicates relatively high quality.

### (Processing related to uplink of relay station according to second embodiment)

Processing at the relay station 121 and related to uplinks that transfer data from the mobile stations 131, 132 to the core network 101 will be described. Nonetheless, at the relay station 122, the processing related to uplinks that transfer data from the mobile station 133 to the core network 102 is identical. The other-cell control CH decoder 1611 outputs the decoded adjacent cell resource information to the UL scheduler 424.

The UL scheduler 424, based on the adjacent cell resource information received from the other-cell control CH decoder 1611, determines the wireless resources to be requested of the base station 111, for the wireless paths between the relay station 121 and the mobile stations 131, 132. For example, as wireless resources to be requested, the UL scheduler 424 preferentially determines wireless resources that are not indicated in the adjacent cell resource information. For example, from among the wireless resources #1-#10 (refer to FIG. 2), the UL scheduler 424 determines as wireless resources to be requested, wireless resources that are not indicated in the adjacent cell resource information and for which the CQI indicates a relatively high quality.

### (Operation example of communication system according to second embodiment)

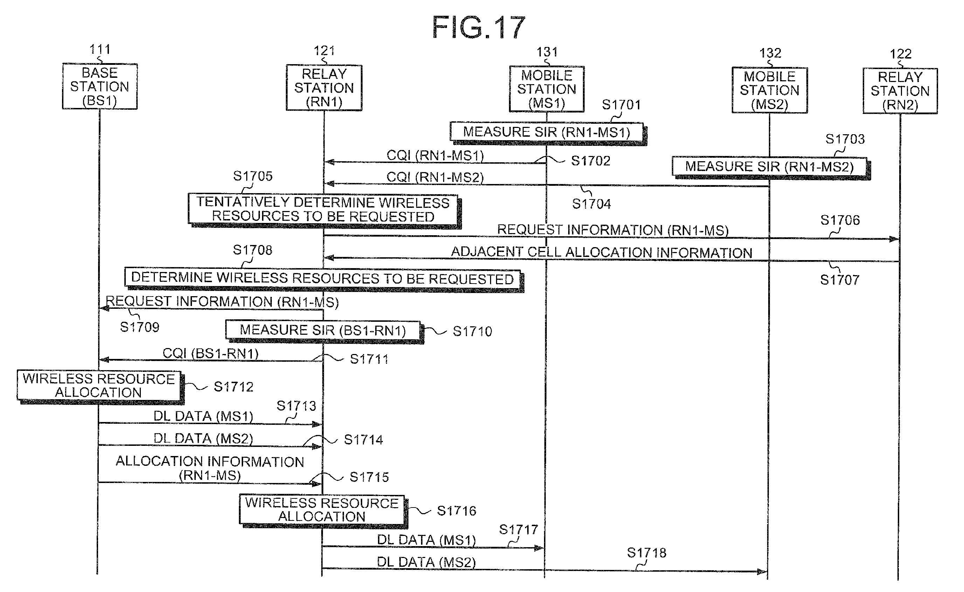

FIG. 17 is a sequence diagram of an example of downlink operation of the communication system depicted in FIG. 14. Although downlink operation at the communication system 100, from the base station 111 to the mobile stations 131, 132 will be described, the downlink operation from the base station 112 to the mobile station 133 is identical. Steps S1701-S1704 depicted in FIG. 17 are identical to steps S601-S604 depicted in FIG. 6 and description thereof is omitted.

After step S1704, the relay station 121, based on the CQIs transmitted at step S1702 and step S1704, tentatively determines the wireless resource to be requested (step S1705). The relay station 121 uses the control CH to transmit to the relay station 122, the request information (RN1-MS) indicating wireless resources tentatively determined at the step S1705 (step S1706). The request information (RN1-MS) transmitted at step S1706, from the perspective of the relay station 122, is adjacent cell resource information transmitted from the relay station 121, which is the relay station of an adjacent cell.

The relay station 121 receives, by the control CH, the adjacent cell resource information transmitted by the relay station 122 (step S1707). The adjacent cell resource information transmitted at step S1707 is the request information also transmitted to the relay station 122 and indicating the wireless resources that the relay station 122 requests the base station 112 to allocate.

Further, the adjacent cell resource information received at step S1707 may be the request information also transmitted to the relay station 122 and indicating the wireless resources tentatively determined to be requested by the relay station 122. The relay station 121, based on the wireless resources tentatively determined at step S1705 and on the adjacent cell resource information received at step S1707, determines the wireless resources to be requested (step S1708).

The relay station 121 uses the control CH to transmit to the base station 111, the request information (RN1-MS) indicating the wireless resources determined at step S1708 (step S1709). The relay station 121 measures the SIR (BS1-RN1) in the wireless path between the base station 111 and the relay station 121 (step S1710). The relay station 121 uses the control CH to transmit to the base station 111, the CQI (BS1-RN1) indicating the SIR (BS1-RN1) measured at step S1710 (step S1711).

The base station 111 performs wireless resource allocation (step S1712). At step S1712, wireless resources are allocated to the wireless path between the base station 111 and the relay station 121, based on the CQI (BS1-RN1) transmitted at step S1711. Wireless resources included among the wireless resources indicated in the request information (RN1-MS) transmitted at step S1709 are allocated to the wireless paths between the relay station 121 and the mobile stations 131, 132. Steps S1713-S1718 depicted in FIG. 17 are identical to steps S612-S617 depicted in FIG. 6 and description thereof is omitted.

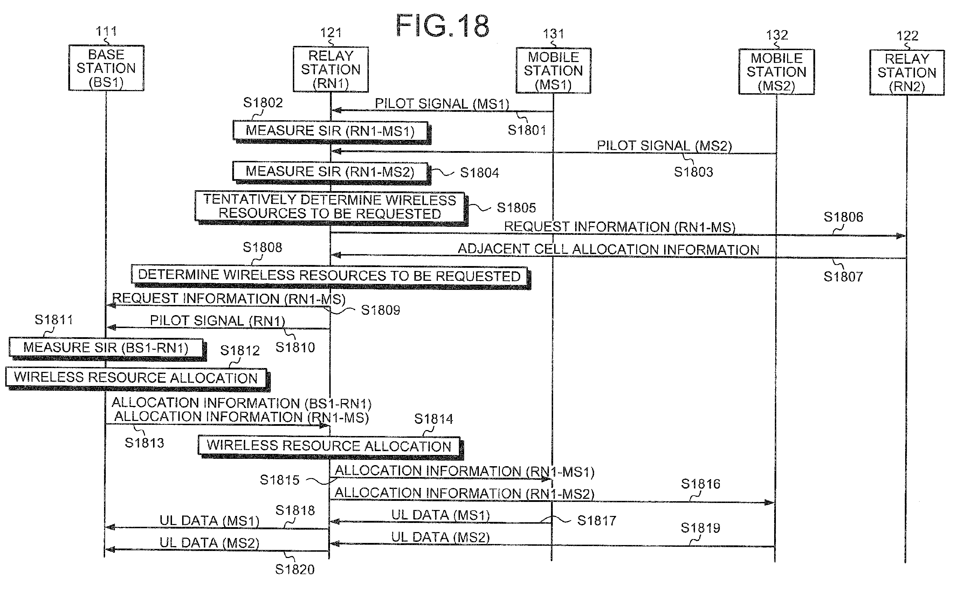

FIG. 18 is a sequence diagram of an example of uplink operation of the communication system depicted in FIG. 14. Although uplink operation in the communication system 100, from the mobile stations 131, 132 to the base station 111 will be described, the uplink operation from the mobile station 133 to the base station 112 is identical. Steps S1801-S1804 depicted in FIG. 18 are identical to steps S701-S704 depicted in FIG. 7 and description thereof is omitted.

After step S1804, the relay station 121, based on the SIRs measured at step S1802 and step S1804, tentatively determines the wireless resources to be requested (step S1805). The relay station 121 uses the control CH to transmit to the relay station 122, the request information (RN1-MS) indicating the wireless resources tentatively determined at step S1805 (step S1806). The request information (RN1-MS) transmitted at step S1806, from the perspective of the relay station 122, is adjacent cell resource information transmitted by the relay station 121, which is the relay station of an adjacent cell.

The relay station 121 receives, by the control CH, the adjacent cell resource information transmitted by the relay station 122 (step S1807). The adjacent cell resource information received at step S1807 is the request information also transmitted to the relay station 121 and indicating the wireless resources that the relay station 122 requests the base station 112 to allocate.

The adjacent cell resource information received at step S1807 may be the request information also transmitted to the base station 111 and indicating the wireless resources tentatively determined to be requested by the relay station 122. The relay station 121, based on the wireless resources tentatively determined at step S1805 and on the adjacent cell resource information received at step S1807, determines the wireless resources to be requested (step S1808).

The relay station 121 transmits to the base station 111, the request information (RN1-MS) indicating wireless resources determined at the step S1808 (step S1809). The relay station 121 uses the control CH to transmit the pilot signal (RN1) to the base station 111 (step S1810). The base station 111, based on the pilot signal (RN1) transmitted at step S1808, measures the SIR (BS1-RN1) in the wireless path between the base station 111 and the relay station 121 (step S1811).

The base station 111 performs wireless resource allocation (step S1812). At step S1812, wireless resources are allocated to the wireless path between the base station 111 and the relay station 121, based on the SIR (BS1-RN1) measured at step S1811. Wireless resources included among the wireless resources indicated by the request information (RN1-MS) received at step S1809 are allocated to the wireless paths between the relay station 121 and the mobile stations 131, 132. Steps S1813-S1820 depicted in FIG. 18 are identical to steps S712-S719 depicted in FIG. 7 and description thereof is omitted.

### (Example of determining wireless resource to be requested)

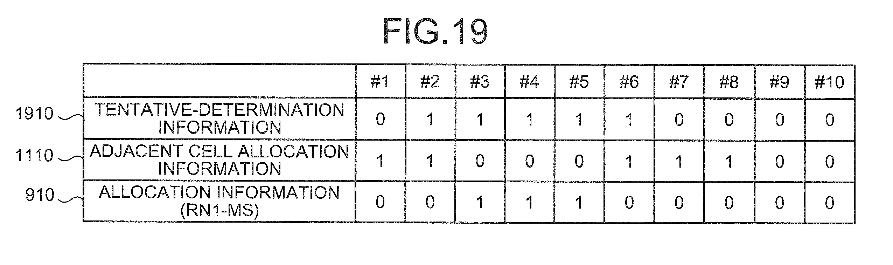

FIG. 19 is a diagram of an example wireless resource determination by the relay station. In FIG. 19, parts identical to those depicted in FIG. 11 are given the same reference numerals and description thereof is omitted. In this example, it is assumed that the SIR in the wireless paths between the relay station 121 and the mobile stations 131, 132 is the SIR 810 and the SIR 820 values depicted in FIG. 8. Tentative-determination information 1910 depicted in FIG. 19 indicates the wireless resources tentatively determined to be requested by the relay station 121.

In the tentative-determination information 1910, "1" indicates a wireless resource to be requested of the base station 111, and "0" a wireless resource that is not to be requested of the base station 111. For example, as wireless resources to be requested, the relay station 121 determines wireless resources for which the SIR 810 and the SIR 820 are relatively high among the wireless resources #1-#10. In this example, it is assumed that the relay station 121 tentatively determines the wireless resources #2-#6 as wireless resources to be requested.

The relay station 121, among the wireless resources #2-#6 indicated in the tentative-determination information 1910, preferentially determines, as the wireless resources to be requested, the wireless resources that are not the wireless resources #1, #2, #6-#8 indicated in the adjacent cell resource information 1110. In this example, as depicted in the request information 910, the relay station 121 determines the wireless resources #3-#5 as the wireless resources to be requested.

The request information 910 is transmitted to the base station 111. The base station 111 allocates to the wireless paths between the relay station 121 and the mobile stations 131, 132, wireless resources included among the wireless resources #3-#5 indicated in the request information 910. For example, if none of the wireless resources #3-#5 have been allocated to a relay station, excluding the relay station 121 in the cell 111a, the base station 111 allocates the wireless resources #3-#5 to the wireless paths between the relay station 121 and the mobile stations 131, 132.

### (Another operation example of communication system according to second embodiment)

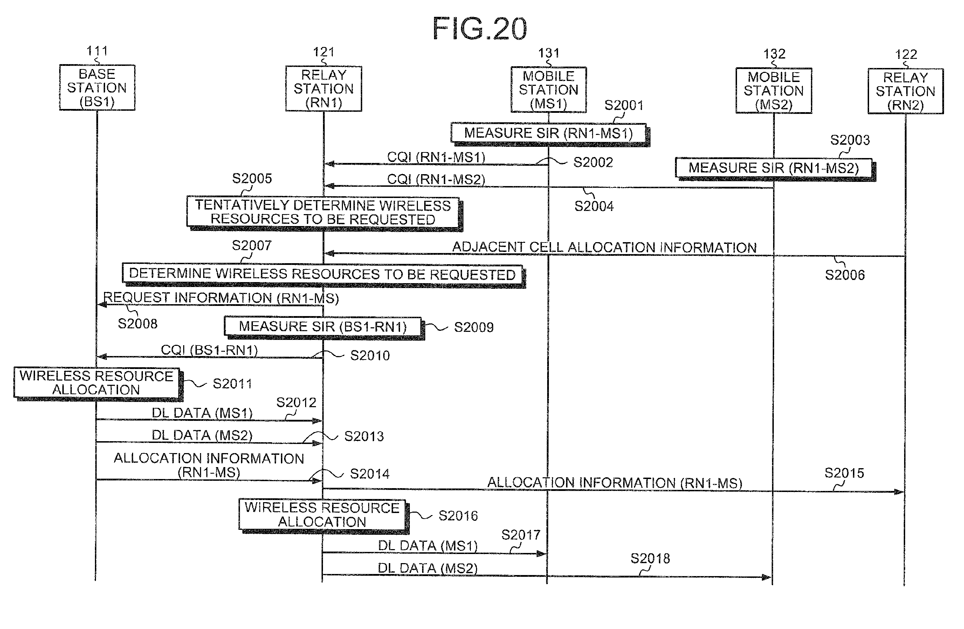

FIG. 20 is a sequence diagram of another example of the downlink operation depicted in FIG. 17. Steps S2001-S2014 depicted in FIG. 20 are identical to steps S1701-S1705, S1707-S1715 depicted in FIG. 17 and description thereof is omitted. Nonetheless, the adjacent cell resource information received at step S2006 is the allocation information transmitted by the base station 112 to the relay station 122, and by the relay station 122 to the relay station 121.

After step S2014, the relay station 121 uses the control CH and transmits to the relay station 122, the allocation information (RN1-MS) transmitted at step S2014 (step S2015). The allocation information (RN1-MS) transmitted at step S2015 is, from the perspective of the relay station 122, adjacent cell resource information transmitted by the relay station 121, which is the relay station of an adjacent cell. Steps S2016-S2018 depicted in FIG. 20 are identical to steps S1716-S1718 depicted in FIG. 17 and description thereof is omitted.

At step S2015, the DL scheduler 405 depicted in FIG. 16 outputs to the other-cell control CH generator 428, the allocation information (RN1-MS) output by the control CH decoder 416. The other-cell control CH generator 428 assigns to a control CH, the allocation information (RN1-MS) received from the DL scheduler 405 and outputs the control CH assigned allocation information (RN1-MS) to the multiplexer 413. The allocation information (RN1-MS) output by the other-cell control CH generator 428 is transmitted to the relay station 122, by the transmitter 414.

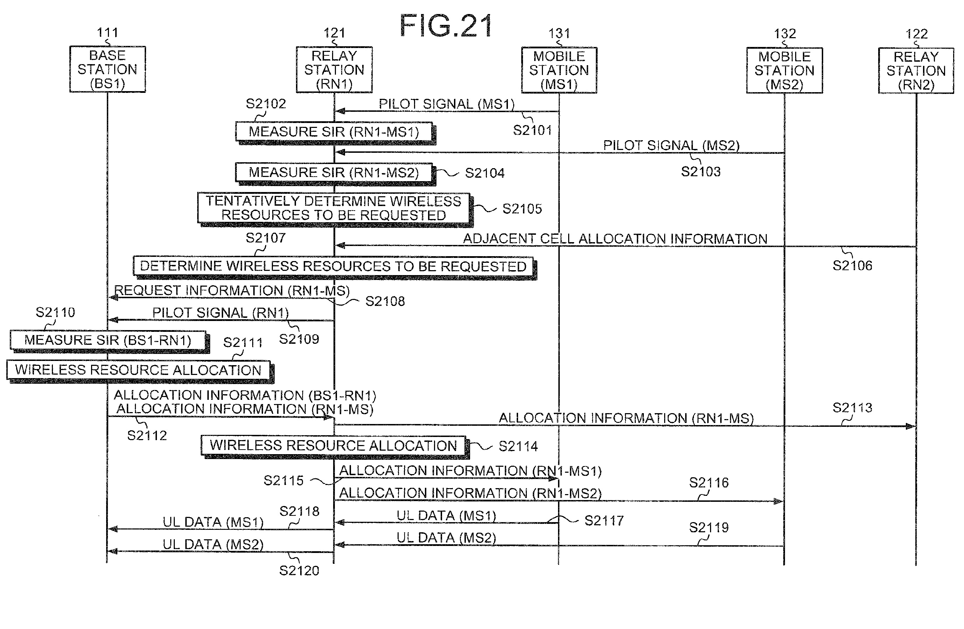

FIG. 21 is a sequence diagram of another example of the uplink operation depicted in FIG. 18. Steps S2101-S2112 depicted in FIG. 21 are identical to steps S1801-S1805, S1807-S1813 depicted in FIG. 18 and description thereof is omitted. Nonetheless, the adjacent cell resource information transmitted at step S2106 is the allocation information transmitted by the base station 112 to the relay station 122, and transmitted by the relay station 122 to the relay station 121.

After step S2112, the relay station 121 uses the control CH and transmits to the relay station 122, the allocation information (RN1-MS) transmitted at step S2112 (step S2113). The request information (RN1-MS) transmitted at step S2113 is, from the perspective of the relay station 122, adjacent cell resource information transmitted by the relay station 121, which is the relay station of an adjacent cell. Steps S2114-S2120 depicted in FIG. 21 are identical to steps S1814-S1820 depicted in FIG. 18 and description thereof is omitted.

At step S2113, the UL scheduler 424 depicted in FIG. 16 outputs to the other-cell control CH generator 428, the allocation information (RN1-MS) output by the control CH decoder 416. The other-cell control CH generator 428 assigns to a control CH the allocation information (RN1-MS) received from the UL scheduler 424 and outputs the control CH assigned allocation information (RN1-MS) to the multiplexer 413. The allocation information (RN1-MS) output by the other-cell control CH generator 428 is transmitted to the relay station 122, by the transmitter 414.

As depicted in FIGS. 20 and 21, the relay station 121 receives, as adjacent cell resource information, allocation information that indicates the wireless resources allocated to the relay station 122, by the base station 112 of the cell 112a (adjacent cell). The relay station 121 preferentially determines, as wireless resources to be requested, wireless resources that are not indicated in the adjacent cell resource information. Consequently, the base station 111 is able to allocate to the relay station 121 near the border with the cell 112a, wireless resource that have a low potential of being affected by wireless communication interference consequent to the relay station 122.

In this manner, according to the relay station 121 of second embodiment, the base station 111 is able to allocate wireless resources having a low potential of being affected by wireless communication interference consequent to the relay station 122 (adjacent-cell relay station). Consequently, throughput in a vicinity of the border between the cell 111a and the cell 112a can be improved, whereby, for example, the overall throughput of the cell 111a can be equalized.

Further, request information (or allocation information) from the relay station 122, which is in the cell 112a and near the border with the cell 111a, to the relay station 121 is transmitted as adjacent cell resource information, enabling the above effects to be achieved. In general, since the number of relay stations (e.g., the relay station 122) near a border relative to the total number of relay station in the cell 112a is small, the adjacent cell resource information can be transmitted by newly setting few control CHs. Therefore, the above effects can be achieved without large changes to the communication system.

In the second embodiment, a configuration is assumed in which adjacent cell resource information is exchanged between the relay station 121 and the relay station 122; and at the relay station 121 and the relay station 122, respectively, wireless resources to be requested, are determined taking the adjacent cell resource information into consideration. Therefore, at the cell 112a, the above effects described with respect to cell 111a can also be achieved.

However, any one among the configuration of transmitted adjacent cell resource information from the relay station 121 to the relay station 122 and the configuration of transmitting adjacent cell resource information from the relay station 122 to the relay station 121 can be omitted. For example, the configuration of transmitting adjacent cell resource information from the relay station 121 to the relay station 122 can be omitted. In this case, at the relay station 122, wireless resources to be requested are determined without taking the adjacent cell resource information into consideration. Nonetheless, at cell 111a, the above effects can be achieved.

As described, according to the disclosed base station, relay station, communication system, and communication method, throughput near cell boundaries can be improved.

### EXPLANATIONS OF LETTERS OR NUMERALS

L1-L3 wireless path
100 communication system
111a, 112a cell
210 wireless resource
301, 401, 407, 501 receiving antenna
313, 415, 422, 509 transmitting antenna

## Claims

1. A base station that, by relay of a relay station provided in a cell of the base station, wirelessly communicates with a mobile station located in the cell, the base station comprising:
a receiving unit that receives from an adjacent-cell relay station provided in an adjacent cell, adjacent cell resource information related to wireless resources allocated to the adjacent-cell relay station; and
an allocating unit that preferentially allocates to a wireless path between the relay station and the mobile station, wireless resources that are different from the wireless resources indicated in the received adjacent cell resource information.

2. The base station according to claim 1, wherein the allocating unit, among wireless resources requested by the relay station, preferentially allocates to the wireless path between the relay station and the mobile station, wireless resources that are different from the wireless resources indicated in the adjacent cell resource information.

3. The base station according to claim 1 or 2, wherein the receiving unit receives, as the adjacent cell resource information, request information that the adjacent-cell relay station uses to request a base station of the adjacent cell to allocate wireless resources.

4. The base station according to claim 1 or 2, wherein the receiving unit receives, as the adjacent cell resource information, allocation information that indicates the wireless resources allocated to the adjacent-cell relay station by a base station of the adjacent cell.

5. A relay station that is provided in a given cell and relays wireless communication between a base station and a mobile station in the given cell, the relay station comprising:
a receiving unit that receives from an adjacent-cell relay station provided in an adjacent cell, adjacent cell resource information related to wireless resources allocated to the adjacent-cell relay station; and
a communications unit that preferentially uses wireless resources that are different from the wireless resources indicated in the received adjacent cell resource information and wirelessly communicates with the mobile station.

6. The relay station according to claim 5, further comprising:
a determining unit that as request information requesting wireless resource allocation to a wireless path between the relay station and the mobile station, preferentially determines wireless resources that are different from the wireless resources indicated in the adjacent cell resource information;
a transmitting unit that transmits to the base station, the request information determined by the determining unit; and
a second receiving unit that receives allocation information indicating the wireless resources allocated by the base station in response to the request information transmitted by the transmitting unit, wherein
the communications unit uses the wireless resources indicated in the allocation information received by the second receiving unit and wirelessly communicates with the mobile station.

7. The relay station according to claim 6, further comprising an acquiring unit that acquires communication quality in the wireless path between the relay station and the mobile station, wherein
the determining unit, from among wireless resources that are difference from the wireless resources indicated in the adjacent cell resource information, determines the request information, based on the acquired communication quality.

8. The relay station according to any one of claims 5 to 7, wherein the receiving unit receives, as the adjacent cell resource information, request information that the adjacent-cell relay station uses to request a base station of the adjacent cell to allocate wireless resources.

9. The relay station according to any one of claims 5 to 7, wherein the receiving unit receives, as the adjacent cell resource information, allocation information that indicates the wireless resources allocated to the adjacent-cell relay station by the base station of the adjacent cell.

10. A communication system comprising:
a relay station provided in a given cell;
a base station that, by relay of the relay station, wirelessly communicates with a mobile station located in the given cell; and
an adjacent-cell relay station that is provided in an adjacent cell of the given cell and transmits to the base station, adjacent cell resource information that indicates wireless resources allocated to the adjacent-cell relay station, wherein
the base station preferentially allocates to a wireless path between the relay station and the mobile station, wireless resources that are different from the wireless resources indicated in the adjacent cell resource information transmitted by the adjacent-cell relay station.

11. A communication system comprising:
a relay station that is provided in a given cell and relays wireless communication between a base station and a mobile station in the given cell; and
an adjacent-cell relay station that is provided in an adjacent cell of the given cell and transmits to the relay station, adjacent cell resource information that indicates wireless resources allocated to the adjacent-cell relay station, wherein
the relay station preferentially uses wireless resources that are different from the wireless resources indicated in the adjacent cell resource information transmitted by the adjacent-cell relay station and wirelessly communicates with the mobile station.

12. A base station communication method of wirelessly communicating with a mobile station located in a cell of the base station, by relay of a relay station provided in the cell, the method comprising:
receiving from an adjacent-cell relay station provided in an adjacent cell, adjacent cell resource information that indicates wireless resources allocated to the adjacent-cell relay station; and
allocating preferentially to a wireless path between the relay station and the mobile station, wireless resources that are difference from the wireless resources indicated in the received adjacent cell resource information.

13. A communication method of relaying, by a relay station provided in a given cell, wireless communication between a base station and a mobile station in the given cell, the method comprising:
receiving from an adjacent-cell relay station provided in an adjacent cell, adjacent cell resource information related to wireless resources allocated to the adjacent-cell relay station; and
communicating wirelessly with the mobile station, by preferentially using wireless resources that are different from the wireless resources indicated in the received adjacent cell resource information.

14. A communication method of a communication system that includes a relay station provided in a given cell; a base station that, by relay of the relay station, wirelessly communicates with a mobile station located in the given cell; and an adjacent-cell relay station provided in an adjacent cell of the given cell, the method comprising:
transmitting to the base station and by the adjacent-cell relay station, adjacent cell resource information that indicates wireless resources allocated to the adjacent-cell relay station; and
allocating, by the base station and preferentially to a wireless path between the relay station and the mobile station, wireless resources that are different from the wireless resources indicated in the transmitted adjacent cell resource information.

15. A communication method of a system that includes a relay station provided in a given cell and relaying wireless communication between a base station and a mobile station in the given cell, and an adjacent-cell relay station provided in an adjacent cell of the given cell, the communication method comprising:
transmitting to the relay station and by the adjacent-cell relay station, adjacent cell resource information that indicates wireless resources allocated to the adjacent-cell relay station; and
communicating wirelessly with the mobile station, by the relay station preferentially using wireless resources that are different from the wireless resources indicated in the transmitted adjacent cell resource information.
